# EUROPEAN PATENT APPLICATION

(11) **EP 4 135 376 A1**
(43) Date of publication of application: **15.02.2023**
(21) Application number: 21796960.9
(22) Date of filing: 25.04.2021
(51) Int. Cl.: H04W 12/02

(54) **METHOD AND DEVICE FOR SECURE COMMUNICATION**

(30) Priority: 27.04.2020 CN 202010345953; 09.05.2020 CN 202010389032
(71) Applicant: Huawei Technologies Co., Ltd., Shenzhen, Guangdong 518129 (CN)
(72) Inventor: ZHOU, Yan, Shenzhen, Guangdong 518129 (CN); HE, Chengdong, Shenzhen, Guangdong 518129 (CN); LIN, Qingchun, Shenzhen, Guangdong 518129 (CN)
(74) Representative: Pfenning, Meinig & Partner mbB
(86) International application number: PCT/CN2021/089589
(87) International publication number: WO 2021/218851

(57) **Abstract**

Embodiments of this application disclose a secure communication method and an apparatus. The method includes: A first NF sends a first request message to a third NF, where the first request message carries first pseudonym information of a first user identifier of a terminal device; the third NF determines a trustworthiness attribute of the first user identifier in response to the first request message; and if the trustworthiness attribute of the first user identifier meets a preset condition, the third NF sends a first response message to the first NF, where the first response message carries second pseudonym information of the first user identifier. In the method, the first user identifier exists in a form of a pseudonym between different NFs, so that the first user identifier is prevented from, for example, being tampered with or intercepted by an untrustworthy NF, and security of the first user identifier is improved.

## Description

This application claims priority to Chinese Patent Application No. 202010345953.7, filed with the China National Intellectual Property Administration on April 27, 2020 and entitled "SECURE COMMUNICATION METHOD AND APPARATUS", and to Chinese Patent Application No. 202010389032.0, filed with the China National Intellectual Property Administration on May 9, 2020 and entitled "SECURE COMMUNICATION METHOD AND APPARATUS", which are incorporated herein by reference in their entireties.

### TECHNICAL FIELD

This application relates to the field of communication technologies, and in particular, to a secure communication method and an apparatus.

### BACKGROUND

In a wireless communication system, a terminal device may communicate with one or more core devices via an access device in a radio access network. For example, when the terminal device communicates with an application server, a message sent by the terminal device may pass through a plurality of core devices such as a first network function (network function, NF), a second NF, or a third NF, and arrive at the application server.

In addition, operators and government agencies in different countries pay much attention to security issues of a 5th generation (5th-generation, 5G) communication system. For example, there may be a risk of maliciously leaking user privacy and data during network deployment.

Therefore, how to improve trustworthiness and a security degree of a network, reduce a risk, prevent a weak link from being exploited by anyone, and effectively respond to a security threat is a problem that is being studied by a person skilled in the art.

### SUMMARY

This application provides a secure communication method and an apparatus, to effectively improve security of information exchange between a terminal device and an NF.

According to a first aspect, this application provides a secure communication method. The method includes: a first network function (network function, NF) sends a first request message to a third NF, where the first request message carries first pseudonym information of a first user identifier of a terminal device; the third NF determines a trustworthiness attribute of the first user identifier in response to the first request message; and if the trustworthiness attribute of the first user identifier meets a preset condition, the third NF sends a first response message to the first NF, where the first response message carries second pseudonym information of the first user identifier.

That the trustworthiness attribute of the first user identifier meets a preset condition above may also be understood as that a trustworthiness attribute of the terminal device meets a preset condition. In this embodiment of this application, if the trustworthiness attribute of the first user identifier meets the preset condition, the first user identifier may exist in a form of a pseudonym between different NFs, so that the first user identifier is prevented from, for example, being tampered with or intercepted by an untrustworthy or insecure NF, the first user identifier is effectively protected, and security of the first user identifier is improved.

In a possible implementation, that the third NF sends a first response message to the first NF includes: If a trustworthiness level of the first NF matches a preset level, the third NF sends the first response message to the first NF.

In this embodiment of this application, the preset level is used to measure trustworthiness levels of different NFs. For example, the trustworthiness levels include a strong trustworthiness level, a weak trustworthiness level, and an untrustworthiness level, and the preset level may be the weak trustworthiness level, or the untrustworthiness level. For another example, the trustworthiness levels include a high trustworthiness level, a low trustworthiness level, and an untrustworthiness level, and the preset level may be the low trustworthiness level or the untrustworthiness level. In other words, when the trustworthiness level of the first NF is low, to protect the first user identifier, the third NF may send pseudonym information (that is, the second pseudonym information) of the first user identifier to the first NF.

In a possible implementation, the method further includes: If the trustworthiness level of the first NF does not match the preset level, the third NF sends, to the first NF, a response message carrying the first user identifier.

In other words, when the trustworthiness level of the first NF is high, the third NF can trust the first NF, and therefore may send a real user identifier such as the first user identifier to the first NF.

In a possible implementation, that the third NF sends a first response message to the first NF includes: If a trustworthiness level of a security domain in which the first NF is located matches a preset level, the third NF sends the first response message to the first NF.

In this embodiment of this application, trustworthiness levels of different NFs may be distinguished, and trustworthiness levels of different security domains may also be distinguished. For example, in the method provided in this application, a first security domain, a second security domain, and the like may be distinguished, and a trustworthiness level of the first security domain is different from a trustworthiness level of the second security domain. If the first NF is located in the first security domain, and the first security domain has a weak trustworthiness level, the third NF may send the second pseudonym information of the first user identifier to the first NF. Alternatively, if the first security domain has a strong trustworthiness level (for example, the trustworthiness level does not match the preset level), the third NF may send a real user identifier such as the first user identifier to the first NF.

In a possible implementation, that the third NF determines a trustworthiness attribute of the first user identifier includes: the third NF determines the trustworthiness attribute of the first user identifier based on a subscription level of the first user identifier; or the third NF determines the trustworthiness attribute of the first user identifier based on a session attribute of the first user identifier; or the third NF determines the trustworthiness attribute of the first user identifier based on an industry requirement of the first user identifier.

The subscription level, the session attribute, the industry requirement, or the like of the first user identifier above may also be understood as a subscription level, a session attribute, an industry requirement, or the like of the terminal device. The trustworthiness attribute of the first user identifier may be used to indicate whether the first user identifier needs to be pseudonymized. Alternatively, the trustworthiness attribute of the first user identifier may be used to indicate whether the first user identifier needs to be protected and so on.

In a possible implementation, before that the third NF sends a first response message to the first NF, the method further includes: The third NF obtains the first user identifier based on the first pseudonym information, and generates the second pseudonym information based on the first user identifier.

In this embodiment of this application, the third NF may obtain the first user identifier based on a correspondence between the first user identifier and the first pseudonym information, and the first pseudonym information. In other words, the third NF stores the correspondence between the first user identifier and the first pseudonym information. The correspondence may also be understood as a mapping relationship or the like. This is not limited in this embodiment of this application.

In a possible implementation, the method further includes: The third NF stores a correspondence between the second pseudonym information and the first user identifier.

In a possible implementation, before that the third NF sends a first response message to the first NF, the method further includes: the third NF sends a second request message to a fourth NF, where the second request message carries the first pseudonym information; in response to the second request message, the fourth NF obtains the first user identifier based on the first pseudonym information, and generates the second pseudonym information based on the first user identifier; and the fourth NF sends the second pseudonym information to the third NF, and the third NF receives the second pseudonym information.

In this embodiment of this application, the fourth NF may also store the correspondence between the first user identifier and the first pseudonym information. Therefore, after the third NF determines that the trustworthiness attribute of the first user identifier meets the preset condition, the third NF requests the second pseudonym information from the fourth NF.

Optionally, in the foregoing method, it is described that the third NF determines the trustworthiness attribute of the first user identifier. Optionally, the fourth NF may also store the subscription level or the like of the first user identifier. In other words, the first NF may further send the first request message to the fourth NF, and the fourth NF sends the first response message to the first NF when the fourth NF determines the trustworthiness attribute of the first user identifier and when the trustworthiness attribute of the first user identifier meets the preset condition.

It may be understood that how the third NF or the fourth NF generates the second pseudonym information is not limited in this embodiment of this application.

According to a second aspect, this application provides a secure communication method. The method includes: a first NF sends a first request message to a third NF, where the first request message carries first pseudonym information of a first user identifier of a terminal device; and the first NF receives a first response message from the third NF, where the first response message carries second pseudonym information of the first user identifier.

With reference to the first aspect or the second aspect, in a possible implementation, after receiving the first response message, the first NF may generate a root key (Kamf) based on the second pseudonym information carried in the first response message.

With reference to the first aspect or the second aspect, in a possible implementation, the first response message may further carry the root key. In this case, the terminal device may generate the root key based on the first user identifier. It is ensured that the terminal device is not affected. Therefore, a key derivation algorithm 1 (for example, a KDF1) used by the third NF (or the fourth NF) to generate the second pseudonym information based on the first user identifier and a key derivation algorithm 2 (for example, a KDF2) used by the third NF (or the fourth NF) to generate the root key based on the second pseudonym information need to meet the following condition: The root key generated by the third NF (or the fourth NF) is the same as the root key generated by the terminal device.

With reference to the first aspect or the second aspect, in a possible implementation, the first response message may further carry third indication information, and the third indication information is used to indicate the first NF to generate the root key based on the second pseudonym information. In this case, the root key generated by the terminal device based on the first user identifier also needs to be the same as the root key generated by the first NF based on the second pseudonym information.

It may be understood that in the foregoing method, the terminal device may still generate the root key based on the first user identifier. An embodiment of this application further provides a method. For example, the terminal device generates the root key based on the second pseudonym information. Details are described as follows:

With reference to the first aspect or the second aspect, in a possible implementation, the first response message further carries first indication information and/or second indication information, the first indication information is used to indicate to generate the second pseudonym information and/or a root key, and the second indication information is used to indicate to generate a user plane key.

With reference to the first aspect or the second aspect, in a possible implementation, the method further includes: if the first response message carries the first indication information, the first NF generates the root key based on the second pseudonym information; and the first NF sends the first indication information to the terminal device.

The first indication information may be used to indicate the terminal device to generate the second pseudonym information. Alternatively, the first indication information may be used to indicate the terminal device to generate the root key based on the second pseudonym information.

With reference to the first aspect or the second aspect, in a possible implementation, the method further includes: if the first response message carries the second indication information, the first NF generates the user plane key based on the second pseudonym information; and the first NF sends the second indication information to the terminal device.

The second indication information may be used to indicate the terminal device to generate the user plane key.

With reference to the first aspect or the second aspect, in a possible implementation, the method further includes: The first NF sends the user plane key to a user plane function.

After receiving the user plane key, the user plane function may interact with the terminal device based on the user plane key. The user plane key is obtained based on the second pseudonym information. Therefore, not only the first user identifier is protected, but also data between the terminal device and the user plane function is protected based on the user plane key. This improves security of information exchange.

According to a third aspect, this application provides a secure communication method. The method includes: a third NF receives a first request message from a first NF, where the first request message carries first pseudonym information of a first user identifier of a terminal device; the third NF determines a trustworthiness attribute of the first user identifier in response to the first request message; and if the trustworthiness attribute of the first user identifier meets a preset condition, the third NF sends a first response message to the first NF, where the first response message carries second pseudonym information of the first user identifier.

In a possible implementation, that the third NF sends a first response message to the first NF includes: If a trustworthiness level of the first NF matches a preset level, the third NF sends the first response message to the first NF.

In a possible implementation, the method further includes: If the trustworthiness level of the first NF does not match the preset level, the third NF sends, to the first NF, a response message carrying the first user identifier.

In a possible implementation, that the third NF sends a first response message to the first NF includes: If a trustworthiness level of a security domain in which the first NF is located matches a preset level, the third NF sends the first response message to the first NF.

In a possible implementation, that the third NF determines a trustworthiness attribute of the first user identifier includes: the third NF determines the trustworthiness attribute of the first user identifier based on a subscription level of the first user identifier; or the third NF determines the trustworthiness attribute of the first user identifier based on a session attribute of the first user identifier; or the third NF determines the trustworthiness attribute of the first user identifier based on an industry requirement of the first user identifier.

In a possible implementation, before that the third NF sends a first response message to the first NF, the method further includes: The third NF obtains the first user identifier based on the first pseudonym information, and generates the second pseudonym information based on the first user identifier.

In a possible implementation, the method further includes: The third NF stores a correspondence between the second pseudonym information and the first user identifier.

In a possible implementation, before that the third NF sends a first response message to the first NF, the method further includes: the third NF sends a second request message to a fourth NF, where the second request message carries the first pseudonym information; and the third NF receives the second pseudonym information from the fourth NF.

It may be understood that the foregoing method performed by the third NF may alternatively be performed by the fourth NF. For example, the fourth NF may receive the first pseudonym information of the first user identifier of the terminal device, and then determine the trustworthiness attribute of the first user identifier; and if the trustworthiness attribute of the first user identifier meets the preset condition, the fourth NF may send the second pseudonym information. For example, the fourth NF may directly receive the first request message from the first NF, or the fourth NF may receive a request message from the third NF. For another example, the fourth NF may further generate the second pseudonym information, and store the correspondence between the second pseudonym information and the first user identifier.

According to a fourth aspect, this application provides a secure communication method. The method includes: a fourth NF receives a second request message from a third NF, where the second request message carries first pseudonym information of a first user identifier of a terminal device; in response to the second request message, the fourth NF obtains the first user identifier based on the first pseudonym information, and generates second pseudonym information based on the first user identifier; and the fourth NF sends the second pseudonym information to the third NF.

In a possible implementation, the fourth NF stores a correspondence between the second pseudonym information and the first user identifier.

According to a fifth aspect, this application provides a secure communication method. The method includes: a terminal device receives first indication information sent by a first NF, where the first indication information is used to indicate the terminal device to generate second pseudonym information and/or a root key; the terminal device generates the second pseudonym information based on a first user identifier; the terminal device generates the root key based on the second pseudonym information; and the terminal device generates an access stratum key and/or a non-access stratum key based on the root key, where the access stratum key is used to protect data and/or signaling between the terminal device and an access device, and the non-access stratum key is used to protect data and/or signaling between the terminal device and the first NF.

According to a sixth aspect, this application provides a secure communication method. The method includes: a terminal device receives second indication information sent by a first NF, where the second indication information is used to indicate the terminal device to generate a user plane key; the terminal device generates second pseudonym information based on a first user identifier; the terminal device generates a root key based on the second pseudonym information; and the terminal device generates the user plane key based on the root key, where the user plane key is used to protect data between the terminal device and a user plane function.

According to a seventh aspect, this application provides a secure communication method. The method includes: a first network function (network function, NF) sends a third request message to a network repository function (network function repository function, NRF), where the third request message carries a trustworthiness level; in response to the third request message, the NRF determines a second NF based on the trustworthiness level; and the NRF sends identification information of the second NF to the first NF.

The NRF may determine the second NF based on a stored correspondence between identification information of an NF and a trustworthiness level of the NF. For example, the NRF may store a correspondence between identification information of one or more NFs and a trustworthiness level of the one or more NFs. In this embodiment of this application, the NRF determines the second NF based on the trustworthiness level, so that the first NF can receive the identification information of the second NF. Therefore, the first NF may interact with an NF (that is, the second NF) corresponding to the trustworthiness level. In an aspect, a requirement of a user identifier corresponding to a terminal device on the trustworthiness level can be met. In another aspect, the first NF exchanges data and/or signaling with an NF (for example, the second NF) with a high trustworthiness level. This improves security of exchange between the first NF and the second NF.

In a possible implementation, before that the NRF determines a second NF based on the trustworthiness level, the method further includes: the NRF receives a registration request message sent by the second NF, where the registration request message carries a trustworthiness level of the second NF; and the NRF stores a correspondence between the identification information of the second NF and the trustworthiness level of the second NF.

In other words, the NRF may receive a registration request message sent by one or more NFs, where the registration request message carries a trustworthiness level of the NF; and the NRF may store a correspondence between identification information of the one or more NFs and the trustworthiness level of the one or more NFs, where the one or more NFs include the second NF.

In a possible implementation, that the NRF determines a second NF based on the trustworthiness level includes: The NRF determines the second NF based on the stored correspondence between the identification information of the second NF and the trustworthiness level of the second NF, and the trustworthiness level carried in the third request message.

The NRF stores a correspondence between identification information of one or more NFs and a trustworthiness level of the one or more NFs. Therefore, the NRF may determine the second NF based on the stored correspondence and the trustworthiness level carried in the third message. In other words, the NRF may obtain, from the stored correspondence, the second NF corresponding to the trustworthiness level (that is, the trustworthiness level carried in the third message).

Optionally, before that the NRF determines a second NF based on the trustworthiness level, the method further includes: The NRF preconfigures a trustworthiness level of one or more NFs; and stores a correspondence between identification information and the trustworthiness level of the one or more NFs. In other words, the NRF may further determine the second NF based on preconfiguration information and the trustworthiness level (that is, the trustworthiness level carried in the third message), where the preconfiguration information includes the correspondence between the identification information of the one or more NFs and the trustworthiness level of the one or more NFs.

In a possible implementation, before that a first NF sends a third request message to an NRF, the method further includes: The first NF obtains a trustworthiness attribute of a first user identifier from a third NF; and determines the trustworthiness level based on the trustworthiness attribute of the first user identifier.

In other words, the trustworthiness level carried in the third request message may be determined based on the trustworthiness attribute of the first user identifier. For example, if the trustworthiness attribute of the first user identifier meets a preset condition, the trustworthiness level is higher. For related descriptions of the trustworthiness attribute of the first user identifier, refer to the method described in the first aspect. Details are not described herein again.

In a possible implementation, before that a first NF sends a third request message to an NRF, the method further includes: the first NF sends a fourth request message to an NSSF, where the fourth request message carries identification information of a first slice; and the NSSF sends a fourth response message to the first NF, where the fourth response message carries a trustworthiness level of the first slice.

The identification information of the first slice may be from the terminal device. In other words, when the terminal device sends a related request message to the first NF, the related request message may carry the identification information of the first slice.

In a possible implementation, before that the NSSF sends a fourth response message to the first NF, the method further includes: The NSSF determines the trustworthiness level of the first slice based on first preconfiguration information and the identification information of the first slice, where the first preconfiguration information includes a correspondence between the trustworthiness level of the first slice and the identification information of the first slice.

The first preconfiguration information may be configured by an operator, another NF, or the like. This is not limited in this application. The first preconfiguration information may store identification information of a slice and a trustworthiness level of the slice. For example, the first preconfiguration information may store a correspondence between identification information and a trustworthiness level of one or more slices.

In a possible implementation, that the third request message carries a trustworthiness level includes: the third request message carries the trustworthiness level of the first slice, and the third request message further carries the identification information of the first slice. That the NRF determines a second NF based on the trustworthiness level includes: The NRF determines, based on the identification information of the first slice, a second NF set corresponding to the first slice; and determines the second NF from the second NF set based on a stored correspondence between identification information of an NF and a trustworthiness level of the NF, and the trustworthiness level of the first slice.

In other words, the NRF may determine, from the second NF set based on a stored correspondence between identification information and a trustworthiness level of one or more NFs, the second NF corresponding to the trustworthiness level of the first slice.

In a possible implementation, before that a first NF sends a third request message to an NRF, the method further includes: the first NF sends a fourth request message to an NSSF, where the fourth request message carries identification information of a first slice; and the NSSF sends a fourth response message to the first NF, where the fourth response message carries identification information of a second NF set and a trustworthiness level of the second NF set, and the second NF set is an NF set corresponding to the first slice.

In a possible implementation, before that the NSSF sends a fourth response message to the first NF, the method further includes: The NSSF determines the trustworthiness level of the second NF set based on second preconfiguration information and the identification information of the first slice, where the second preconfiguration information includes a correspondence between the identification information of the second NF set and the trustworthiness level of the second NF set.

The second preconfiguration information may further include a correspondence between the identification information of the first slice and the identification information of the second NF set In other words, the NSSF may determine, from the correspondence, the second NF set corresponding to the first slice, and then determine, from the correspondence, the trustworthiness level corresponding to the second NF set. The second preconfiguration information may store a correspondence between one or more slices and an NF set, and a correspondence between one or more NF sets and a trustworthiness level.

In a possible implementation, that the third request message carries a trustworthiness level includes: the third request message carries the trustworthiness level of the second NF set, and the third request message further carries the identification information of the second NF set. That the NRF determines a second NF based on the trustworthiness level includes: The NRF determines the second NF from the second NF set based on a stored correspondence between identification information of an NF and a trustworthiness level of the NF, and the trustworthiness level of the second NF set.

That the NRF determines a second NF based on the trustworthiness level includes: The NRF determines the second NF from the second NF set based on a stored correspondence between identification information of an NF and a trustworthiness level of the NF, a correspondence between the identification information of the NF and identification information of a set to which the NF belongs, the trustworthiness level of the second NF set, and the identification information of the second NF set.

In other words, the NRF may obtain, based on the stored correspondence between the identification information of the NF and the identification information of the set to which the NF belongs, and the identification information of the second NF set, one or more NFs corresponding to the second NF set; obtain a trustworthiness level of the one or more NFs based on the stored correspondence between the identification information of the NF and the trustworthiness level of the NF; and determine the second NF from the one or more NFs based on the trustworthiness level of the second NF set and the trustworthiness level corresponding to the one or more NFs.

A quantity of NFs included in the second NF set is not limited in this embodiment of this application. For example, the second NF set may include one NF, or the second NF set may include a plurality of NFs. The second NF set includes the second NF. Optionally, the trustworthiness level of the second NF is equal to or higher than the trustworthiness level carried in the third request message.

According to an eighth aspect, this application provides a secure communication method. The method includes: a first NF sends a third request message to an NRF, where the third request message carries a trustworthiness level; the first NF receives a third response message from the NRF, where the third response message carries identification information of a second NF; and the first NF exchanges data and/or signaling with the second NF.

In a possible implementation, before that a first NF sends a third request message to an NRF, the method further includes: The first NF obtains a trustworthiness attribute of a first user identifier from a third NF; and determines the trustworthiness level based on the trustworthiness attribute of the first user identifier.

In a possible implementation, before that a first NF sends a third request message to an NRF, the method further includes: the first NF sends a fourth request message to an NSSF, where the fourth request message carries identification information of a first slice; and the first NF receives a fourth response message from the NSSF, where the fourth response message carries a trustworthiness level of the first slice, or the fourth response message carries a trustworthiness level of a second NF set.

In a possible implementation, when the fourth response message carries the trustworthiness level of the first slice, the third request message carries the trustworthiness level of the first slice and the identification information of the first slice; or when the fourth response message carries the trustworthiness level of the second NF set, the third request message carries the trustworthiness level of the second NF set and identification information of the second NF set.

In a possible implementation, the method further includes: The first NF sends a registration request message to the NRF, where the registration request message carries a trustworthiness level of the first NF.

Optionally, the registration request message may further carry identification information of an NF set to which the first NF belongs.

According to a ninth aspect, this application provides a secure communication method. The method includes: an NRF receives a third request message from a first NF, where the third request message carries a trustworthiness level; in response to the third request message, the NRF determines a second NF based on the trustworthiness level; and the NRF sends a third response message to the first NF, where the third response message carries identification information of the second NF.

In a possible implementation, before that the NRF determines a second NF based on the trustworthiness level, the method further includes: the NRF receives a registration request message sent by the second NF, where the registration request message carries a trustworthiness level of the second NF; and the NRF stores a correspondence between the identification information of the second NF and the trustworthiness level of the second NF.

Optionally, the registration request message may further carry identification information of an NF set to which the second NF belongs.

In a possible implementation, that the NRF determines a second NF based on the trustworthiness level includes: The NRF determines the second NF based on the stored correspondence between the identification information of the second NF and the trustworthiness level of the second NF, and the trustworthiness level carried in the third request message.

In a possible implementation, that the third request message carries a trustworthiness level includes: the third request message carries a trustworthiness level of a first slice, and the third request message further carries identification information of the first slice. That the NRF determines a second NF based on the trustworthiness level includes: The NRF determines, based on the identification information of the first slice, a second NF set corresponding to the first slice; and determines the second NF from the second NF set based on a stored correspondence between identification information of an NF and a trustworthiness level of the NF, and the trustworthiness level of the first slice.

In a possible implementation, that the third request message carries a trustworthiness level includes: the third request message carries a trustworthiness level of a second NF set, and the third request message further carries identification information of the second NF set. That the NRF determines a second NF based on the trustworthiness level includes: The NRF determines the second NF from the second NF set based on a stored correspondence between identification information of an NF and a trustworthiness level of the NF, and the trustworthiness level of the second NF set.

That the NRF determines a second NF based on the trustworthiness level includes: The NRF determines the second NF from the second NF set based on a stored correspondence between identification information of an NF and a trustworthiness level of the NF, a correspondence between the identification information of the NF and identification information of a set to which the NF belongs, the trustworthiness level of the second NF set, and the identification information of the second NF set.

In a possible implementation, the method further includes: The NRF receives a registration request message from the first NF, where the registration request message carries a trustworthiness level of the first NF; and the NRF stores a correspondence between identification information of the first NF and the trustworthiness level of the first NF.

Optionally, the registration request message may further carry identification information of an NF set to which the first NF belongs.

According to a tenth aspect, this application provides a secure communication method. The method includes: an NSSF receives a fourth request message sent by a first NF, where the fourth request message carries identification information of a first slice; the NSSF sends a fourth response message to the first NF, where the fourth response message carries a trustworthiness level of the first slice; or the fourth response message carries identification information of a second NF set and a trustworthiness level of the second NF set, and the second NF set is an NF set corresponding to the first slice.

In a possible implementation, before that the NSSF sends a fourth response message to the first NF, the method further includes: The NSSF determines the trustworthiness level of the first slice based on first preconfiguration information and the identification information of the first slice, where the first preconfiguration information includes a correspondence between the trustworthiness level of the first slice and the identification information of the first slice.

In a possible implementation, before that the NSSF sends a fourth response message to the first NF, the method further includes: The NSSF determines the trustworthiness level of the second NF set based on second preconfiguration information and the identification information of the first slice, where the second preconfiguration information includes a correspondence between the identification information of the second NF set and the trustworthiness level of the second NF set.

It may be understood that in the first aspect to the tenth aspect, the first NF may include an AMF, an SMF, or the like.

According to an eleventh aspect, this application provides a secure communication method. The method includes: a domain name system (domain name system, DNS) receives a fifth request message from a first network function (network function, NF), where the fifth request message carries domain name information and a trustworthiness level; in response to the fifth request message, the DNS determines a second NF based on the domain name information and the trustworthiness level; and the DNS sends identification information of the second NF to the first NF.

In this embodiment of this application, the DNS may determine the second NF based on a stored correspondence between the domain name information and the identification information and a stored correspondence between the identification information and the trustworthiness level (or a stored correspondence between the domain name information and the trustworthiness level). For example, a correspondence between domain name information (or identification information) of one or more NFs and a trustworthiness level of the one or more NFs may be configured in the DNS. The DNS determines the second NF based on the trustworthiness level, so that the first NF may receive the identification information of the second NF, where the identification information of the second NF may include an IP address or the like of the second NF. Therefore, the first NF may interact with an NF (that is, the second NF) corresponding to the trustworthiness level. In an aspect, a requirement of a user identifier corresponding to a terminal device on the trustworthiness level can be met. In another aspect, the first NF exchanges data and/or signaling with an NF (for example, the second NF) with a high trustworthiness level. This improves security of exchange between the first NF and the second NF.

According to a twelfth aspect, this application provides a communication apparatus. In a possible implementation, the communication apparatus includes a corresponding unit that performs the method in any one of the second aspect or the possible implementations of the second aspect. In another possible implementation, the communication apparatus includes a corresponding unit that performs the method in any one of the third aspect or the possible implementations of the third aspect. In still another possible implementation, the communication apparatus includes a corresponding unit that performs the method in any one of the fourth aspect or the possible implementations of the fourth aspect. In still another possible implementation, the communication apparatus includes a corresponding unit that performs the method in any one of the eighth aspect or the possible implementations of the eighth aspect. In still another possible implementation, the communication apparatus includes a corresponding unit that performs the method in any one of the ninth aspect or the possible implementations of the ninth aspect. In still another possible implementation, the communication apparatus includes a corresponding unit that performs the method in any one of the tenth aspect or the possible implementations of the tenth aspect. In still another possible implementation, the communication apparatus includes a corresponding unit that performs the method described in the eleventh aspect.

For example, the communication apparatus includes a transceiver unit and a processing unit.

According to a thirteenth aspect, this application provides a communication apparatus. The communication apparatus includes a processor, configured to execute a program stored in a memory. In a possible implementation, when the program is executed, the communication apparatus is enabled to perform the method described in any one of the second aspect or the possible implementations of the second aspect. In another possible implementation, when the program is executed, the communication apparatus is enabled to perform the method described in any one of the third aspect or the possible implementations of the third aspect. In still another possible implementation, when the program is executed, the communication apparatus is enabled to perform the method described in any one of the fourth aspect or the possible implementations of the fourth aspect. In still another possible implementation, when the program is executed, the communication apparatus is enabled to perform the method described in any one of the eighth aspect or the possible implementations of the eighth aspect. In still another possible implementation, when the program is executed, the communication apparatus is enabled to perform the method described in any one of the ninth aspect or the possible implementations of the ninth aspect. In still another possible implementation, when the program is executed, the communication apparatus is enabled to perform the method described in any one of the tenth aspect or the possible implementations of the tenth aspect. In still another possible implementation, when the program is executed, the communication apparatus is enabled to perform the method described in the eleventh aspect.

In a possible implementation, the memory is located outside the communication apparatus.

In a possible implementation, the memory is located in a network device.

In a possible implementation, the network device further includes a transceiver. The transceiver is configured to receive a signal or send a signal. Specific implementations of the transceiver and the processor are not described in detail herein.

According to a fourteenth aspect, this application provides a communication apparatus. The communication apparatus includes a processing circuit and an interface circuit. The interface circuit is configured to receive computer code and transmit the computer code to a processor. The processor runs the computer code to perform the foregoing method performed by the NF. Specific implementations of the interface circuit and the processing circuit are not described in detail herein.

According to a fifteenth aspect, this application provides a communication apparatus. The communication apparatus includes a corresponding unit that performs the method in any one of the fifth aspect or the possible implementations of the fifth aspect. Alternatively, the communication apparatus includes a corresponding unit that performs the method in any one of the sixth aspect or the possible implementations of the sixth aspect.

For example, the communication apparatus includes a transceiver unit and a processing unit.

According to a sixteenth aspect, this application provides a communication apparatus. The communication apparatus includes a processor, configured to execute a program stored in a memory, and when the program is executed, the communication apparatus is enabled to perform the method described in any one of the fifth aspect or the possible implementations of the fifth aspect. Alternatively, when the program is executed, the communication apparatus is enabled to perform the method described in any one of the sixth aspect or the possible implementations of the sixth aspect.

In a possible implementation, the memory is located outside the communication apparatus.

According to a seventeenth aspect, this application provides a communication apparatus. The communication apparatus includes a processor, a memory, and a program that is stored in the memory and that can be run on the processor. When the program is run, the communication apparatus is enabled to perform the method described in any one of the fifth aspect or the possible implementations of the fifth aspect. Alternatively, when the program is run, the communication apparatus is enabled to perform the method described in any one of the sixth aspect or the possible implementations of the sixth aspect.

According to an eighteenth aspect, this application provides a communication apparatus. The communication apparatus includes a processor, a memory, and a transceiver. The transceiver is configured to receive a signal or send a signal. The memory is configured to store computer code. The processor is configured to execute the computer code, to enable the communication apparatus to perform the method described in any one of the fifth aspect or the possible implementations of the fifth aspect. Alternatively, the processor is configured to execute computer code, to enable the communication apparatus to perform the method described in any one of the sixth aspect or the possible implementations of the sixth aspect.

According to a nineteenth aspect, this application provides a communication apparatus. The communication apparatus includes a processing circuit and an interface circuit. The interface circuit is configured to obtain first indication information, where the first indication information is used to indicate the communication apparatus to generate second pseudonym information. The processing circuit is configured to: generate the second pseudonym information based on a first user identifier; generate a root key according to the second pseudonym information; and generate an access stratum key and/or a non-access stratum key based on the root key, where the access stratum key is used to protect data and/or signaling between the communication apparatus and an access device, and the non-access stratum key is used to protect data and/or signaling between the communication apparatus and a first NF.

Alternatively, the interface circuit is configured to obtain second indication information, where the second indication information is used to indicate the communication apparatus to generate a user plane key. The processing circuit is configured to generate second pseudonym information based on a first user identifier, generate a root key based on the second pseudonym information, and generate the user plane key based on the root key, where the user plane key is used to protect data between the communication apparatus and a user plane function.

According to a twentieth aspect, this application provides a computer-readable storage medium. The computer-readable storage medium is configured to store a computer program. In a possible implementation, when the computer program is run on a computer, the method described in any one of the second aspect or the possible implementations of the second aspect is performed. In another possible implementation, when the computer program is run on a computer, the method described in any one of the third aspect or the possible implementations of the third aspect is performed. In still another possible implementation, when the computer program is run on a computer, the method described in any one of the fourth aspect or the possible implementations of the fourth aspect is performed. In still another possible implementation, when the computer program is run on a computer, the method described in any one of the fifth aspect or the possible implementations of the fifth aspect is performed. In still another possible implementation, when the computer program is run on a computer, the method described in any one of the sixth aspect or the possible implementations of the sixth aspect is performed. In still another possible implementation, when the computer program is run on a computer, the method described in any one of the eighth aspect or the possible implementations of the eighth aspect is performed. In still another possible implementation, when the computer program is run on a computer, the method described in any one of the ninth aspect or the possible implementations of the ninth aspect is performed. In still another possible implementation, when the computer program is run on a computer, the method described in any one of the tenth aspect or the possible implementations of the tenth aspect is performed.

According to a twenty-first aspect, this application provides a computer program product. The computer program product includes a computer program or computer code, and when the computer program product runs on a computer, the method described in any one of the foregoing aspects or the possible implementations of the aspects is performed.

According to a twenty-second aspect, this application provides a computer program. When the computer program is run on a computer, the method described in any one of the foregoing aspects or the possible implementations of the aspects is performed.

According to a twenty-third aspect, this application provides a communication apparatus. In a possible implementation, the communication apparatus is configured to perform the method described in any one of the second aspect or the possible implementations of the second aspect. In another possible implementation, the communication apparatus is configured to perform the method described in any one of the third aspect or the possible implementations of the third aspect. In still another possible implementation, the communication apparatus is configured to perform the method described in any one of the fourth aspect or the possible implementations of the fourth aspect. In still another possible implementation, the communication apparatus is configured to perform the method described in any one of the fourth aspect or the possible implementations of the fourth aspect. In still another possible implementation, the communication apparatus is configured to perform the method described in any one of the fifth aspect or the possible implementations of the fifth aspect. In still another possible implementation, the communication apparatus is configured to perform the method described in any one of the sixth aspect or the possible implementations of the sixth aspect. In still another possible implementation, the communication apparatus is configured to perform the method described in any one of the seventh aspect or the possible implementations of the seventh aspect. In still another possible implementation, the communication apparatus is configured to perform the method described in any one of the eighth aspect or the possible implementations of the eighth aspect. In still another possible implementation, the communication apparatus is configured to perform the method described in any one of the ninth aspect or the possible implementations of the ninth aspect. In still another possible implementation, the communication apparatus is configured to perform the method described in any one of the tenth aspect or the possible implementations of the tenth aspect.

According to a twenty-fourth aspect, this application provides a wireless communication system. The wireless communication system includes a first NF and a third NF. The first NF is configured to perform the method described in any one of the second aspect or the possible implementations of the second aspect. The third NF is configured to perform the method described in any one of the third aspect or the possible implementations of the third aspect.

In a possible implementation, the wireless communication system further includes a fourth NF. The fourth NF is configured to perform the method described in any one of the fourth aspect or the possible implementations of the fourth aspect.

In a possible implementation, the first NF may be further configured to perform the method described in any one of the eighth aspect or the possible implementations of the eighth aspect.

In a possible implementation, the wireless communication system further includes an NRF. The NRF is configured to perform the method described in any one of the ninth aspect or the possible implementations of the ninth aspect.

In a possible implementation, the wireless communication system further includes an NSSF. The NSSF is configured to perform the method described in any one of the tenth aspect or the possible implementations of the tenth aspect.

In a possible implementation, the wireless communication system further includes a terminal device. The terminal device is configured to perform the method described in any one of the fifth aspect or the possible implementations of the fifth aspect; or the terminal device may be further configured to perform the method described in any one of the sixth aspect or the possible implementations of the sixth aspect.

### BRIEF DESCRIPTION OF DRAWINGS

FIG. 1 is a schematic diagram of a network architecture according to an embodiment of this application;
FIG. 2A and FIG. 2B are a schematic flowchart of a secure communication method according to an embodiment of this application;
FIG. 3a is a schematic flowchart of a secure communication method according to an embodiment of this application;
FIG. 3b is a schematic flowchart of a secure communication method according to an embodiment of this application;
FIG. 4A and FIG. 4B are a schematic diagram of a scenario of a secure communication method according to an embodiment of this application;
FIG. 5 is a schematic flowchart of a secure communication method according to an embodiment of this application;
FIG. 6a is a schematic flowchart of a secure communication method according to an embodiment of this application;
FIG. 6b is a schematic flowchart of a secure communication method according to an embodiment of this application;
FIG. 6c is a schematic flowchart of a secure communication method according to an embodiment of this application;
FIG. 6d is a schematic flowchart of a secure communication method according to an embodiment of this application;
FIG. 7a is a schematic diagram of a network architecture for secure communication according to an embodiment of this application;
FIG. 7b is a schematic diagram of a network architecture for secure communication according to an embodiment of this application;
FIG. 8 is a schematic diagram of a structure of a communication apparatus according to an embodiment of this application;
FIG. 9 is a schematic diagram of a structure of a communication apparatus according to an embodiment of this application;
FIG. 10 is a schematic diagram of a structure of a communication apparatus according to an embodiment of this application; and
FIG. 11 is a schematic diagram of a wireless communication system according to an embodiment of this application.

### DESCRIPTION OF EMBODIMENTS

To make the objectives, technical solutions, and advantages of this application clearer, the following further describes this application in detail with reference to the accompanying drawings.

In the specification, the claims, and the accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular characteristic, structure, or feature described with reference to embodiments may be included in at least one embodiment of this application. The phrase appearing at different locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more. The term "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items. For example, at least one of a, b, or c may represent a, b, c, "a and b", "a and c", "b and c", or "a, b, and c".

The following first describes a communication system to which this application is applied.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communication system, a 5th generation (5th generation, 5G) communication system, a new radio (new radio, NR) communication system, or another future communication system such as a 6G communication system.

For example, this application is applied to the 5G communication system. The following describes network functions in the 5G system by using an example.

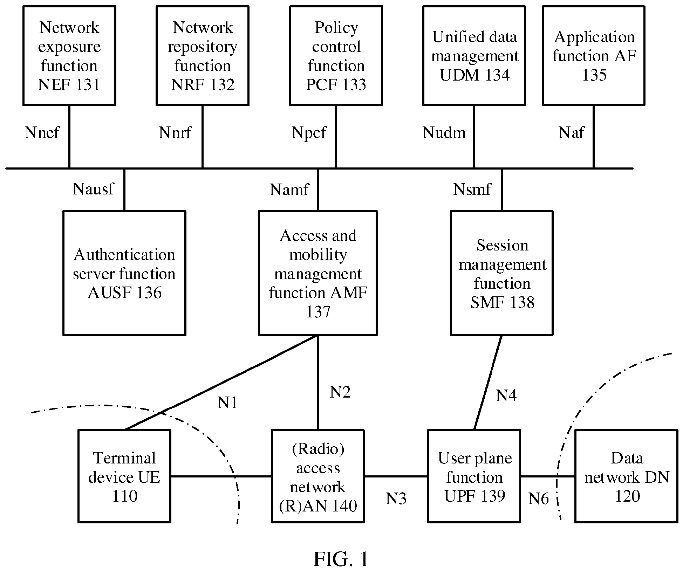

Refer to FIG. 1. An example in which a network architecture shown in FIG. 1 is a 5G network architecture that is based on a service-oriented architecture defined in a 3rd Generation Partnership Project (3rd generation partnership project, 3GPP) standardization process is used. As shown in FIG. 1, the network architecture may include at least three parts: a terminal device part, an operator network part, a data network (data network, DN) part, and the like.

The terminal device part may include a terminal device 110, and the terminal device 110 may also be referred to as user equipment (user equipment, UE). The terminal device 110 in this application is a device having a wireless transceiver function, and may communicate with one or more core network (core network, CN) devices (which may also be referred to as core devices) through an access network device (which may also be referred to as an access device) in a radio access network (radio access network, RAN) 140. The terminal device 110 may also be referred to as an access terminal, a terminal, a subscriber unit, a subscriber station, a mobile station, a mobile console, a remote station, a remote terminal, a mobile device, a user terminal, a user agent, a user apparatus, or the like. In a possible implementation, the terminal device 110 may be deployed on land, including an indoor device, an outdoor device, a handheld device, or a vehicle-mounted device; or may be deployed on the water surface (for example, on a ship); or may be deployed in the air (for example, on an airplane, a balloon, or a satellite). In a possible implementation, the terminal device 110 may be a handheld device, a vehicle-mounted device, a wearable device, a terminal in the internet of things or the internet of vehicles, a terminal in any form in a 5G network, a terminal in any form in a future network, or the like that has a wireless communication function. This is not limited in this application.

A part operated by an operator in various communication systems may be referred to as an operator network, a PLMN network, or the like. The operator network is mainly a public network used by a mobile network operator (mobile network operator, MNO) to provide a mobile broadband access service for a user. For example, the operator network or the PLMN network in this application may alternatively be a network that meets a requirement of a 3GPP standard, which is referred to as a 3GPP network for short. The 3GPP network may be usually operated by an operator, and includes but is not limited to a 5th generation mobile communication (5th-generation, 5G) network (5G network for short), a 4th generation mobile communication (4th-generation, 4G) network (4G network for short), or the like.

As shown in FIG. 1, the operator network may include a network exposure function (network exposure function, NEF) 131, a network repository function (network function repository function, NRF) 132, a policy control function (policy control function, PCF) 133, a unified data management (unified data management, UDM) 134, an application function (application function, AF) 135, an authentication server function (authentication server function, AUSF) 136, an access and mobility management function (access and mobility management function, AMF) 137, a session management function (session management function, SMF) 138, a user plane function (user plane function, UPF) 139, a (radio) access network ((radio) access network, (R)AN) 140, and the like. In the operator network, a part other than the (radio) access network 140 part may be referred to as a core network (core network, CN) part or a core network part.

A data network DN 120 may also be referred to as a packet data network (packet data network, PDN), and is usually a network outside the operator network, for example, a third-party network. For example, the operator network may access a plurality of data networks DNs 120, and a plurality of services may be deployed in the data networks DNs 120, to provide services such as a data service and/or a voice service for the terminal device 110. A specific representation form of the third-party network may be specifically determined based on an actual application scenario. This is not limited in this application.

For example, the following briefly describes network functions in the operator network.

The (R)AN 140 is a sub-network of the operator network, and is an implementation system between a service node in the operator network and the terminal device 110. To access the operator network, the terminal device 110 first accesses the (R)AN 140, and then connects to a network function in the operator network through the (R)AN 140. An access network device in embodiments of this application is a device that provides a wireless communication function for the terminal device 110, and may also be referred to as an access device, a (R)AN device, or the like. The (R)AN device includes but is not limited to a next generation NodeB (next generation node base station, gNB) in a 5G system, an evolved NodeB (evolved NodeB, eNB) in an LTE system, a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (base band unit, BBU), a transmission reception point (transmitting and receiving point, TRP), a transmission point (transmitting point, TP), a small cell device (pico), a mobile switching center, a network device in a future network, or the like. It may be understood that a specific type of the access network device is not limited in this application. In systems using different radio access technologies, devices having functions of the access network device may have different names. For ease of description, the (R)AN 140 is described below by using an access device as an example.

Optionally, in some deployments of the access device, the access device may include a centralized unit (centralized unit, CU), a distributed unit (distributed unit, DU), and the like. In some other deployments of the access device, the CU may be further divided into a CU-control plane (control plane, CP), a CU-user plane (user plan, UP), and the like. In some other deployments of the access device, the access device may alternatively have an open radio access network (open radio access network, ORAN) architecture or the like. A specific deployment manner of the access device is not limited in this application.

The network exposure function (NEF) (which may also be referred to as an NEF network function or an NEF network function entity) 131 is a control plane function provided by the operator. The NEF network function 131 securely exposes an external interface of the operator network to a third party. When the SMF network function 138 needs to communicate with a third-party network function, the NEF network function 131 may serve as a relay for communication between the SMF network function 138 and a third-party network entity. When serving as the relay, the NEF network function 131 may translate identification information of a subscriber and identification information of the third-party network function. For example, when sending a SUPI of the subscriber from the operator network to the third party, the NEF network function 131 may translate the SUPI into a corresponding external identity (identity, ID) of the SUPI. On the contrary, when sending an external ID (an ID of the third-party network entity) to the operator network, the NEF network function 131 may translate the external ID into a SUPI.

The network repository function NRF 132 may be configured to maintain real-time information of all network function services in a network.

In embodiments of this application, the network repository function NRF 132 may store identification information and a trustworthiness level of one or more NFs. For example, the NRF may store identification information of a second network function (network function, NF) and a trustworthiness level of the second NF.

The policy control function PCF 133 is a control plane function provided by the operator, and is configured to provide a PDU session policy for the session management function SMF 138. The policy may include a charging-related policy, a QoS-related policy, an authorization-related policy, and the like.

The unified data management UDM 134 is a control plane function provided by the operator, and is responsible for storing information such as a subscription permanent identifier (subscriber permanent identifier, SUPI), a security context (security context), and subscription data of a subscriber in the operator network. The subscriber in the operator network may be specifically a user using a service provided by the operator network, for example, a user using a terminal device SIM card of China Telecom, or a user using a terminal device SIM card of China Mobile. For example, the SUPI of the subscriber may be a number of the terminal device SIM card. The security context may be data (cookie), a token (token), or the like stored in a local terminal device (for example, a mobile phone). The subscription data of the subscriber may be a supporting service of the terminal device SIM card, for example, a traffic package of the mobile phone SIM card.

In embodiments of this application, the subscription data of the subscriber may further include a subscription level of the subscriber. For example, the subscriber is a common user or a very important person (very important person, VIP). In embodiments of this application, the unified data management UDM 134 may not only store the subscription data of the subscriber, but also determine a trustworthiness attribute of the subscriber based on the subscription level of the subscriber.

The application function (application function, AF) 135 is configured to perform application-affected data routing, access the network exposure function, interact with a policy framework to perform policy control, and so on.

The authentication server function AUSF 136 is a control plane function provided by the operator, and is usually configured to perform primary authentication, that is, authentication between the terminal device 110 (the subscriber) and the operator network.

The access and mobility management function AMF 137 is a control plane network function provided by the operator network, and is responsible for access control and mobility management when the terminal device 110 accesses the operator network, for example, including functions such as mobility status management, allocation of a temporary user identity, and user authentication and authorization.

The session management function SMF 138 is a control plane network function provided by the operator network, and is responsible for managing a protocol data unit (protocol data unit, PDU) session of the terminal device 110. The PDU session is a channel used to transmit a PDU, and the terminal device and the DN 120 need to transmit a PDU to each other through the PDU session. The SMF 138 may be responsible for establishment, maintenance, deletion, and the like of the PDU session. The SMF 138 includes functions related to a session, for example, session management (for example, session establishment, modification, and release, including tunnel maintenance between the UPF 139 and the (R)AN 140), selection and control of the UPF 139, service and session continuity (service and session continuity, SSC) mode selection, and roaming.

The UPF 139 is a gateway provided by the operator and a gateway for communication between the operator network and the DN 120. The UPF 139 includes functions related to a user plane, for example, data packet routing and transmission, packet detection, service usage reporting, quality of service (quality of service, QoS) processing, lawful interception, uplink packet detection, and downlink data packet storage.

The network functions in the operator network shown in FIG. 1 may further include a network slice selection function (network slice selection function, NSSF) (not shown in FIG. 1), responsible for determining a network slice instance, selecting the AMF network function 137, and so on.

In embodiments of this application, in some implementations, the NSSF may store identification information of a slice and a trustworthiness level of the slice. For example, the NSSF may store identification information of one or more slices and a trustworthiness level of the one or more slices, where one slice corresponds to one trustworthiness level. For example, the NSSF may store identification information of a first slice and a trustworthiness level of the first slice. In some other implementations, the NSSF may further store identification information of a slice and an NF set corresponding to the slice. For example, the NSSF may store identification information of one or more slices and an NF set corresponding to the one or more slices, where for example, one slice corresponds to one NF set, or a plurality of slices correspond to one NF set. For example, the NSSF may store identification information of a first slice and identification information of a second NF set corresponding to the first slice. For example, the identification information of the slice may include a network slice selection assistance information (network slice selection assistance information, NSSAI) set, single network slice selection assistance information (single network slice selection assistance information, S-NSSAI), or the like. A specific form of the identification information of the slice is not limited in embodiments of this application.

It may be understood that the identification information of the first slice and the identification information of the second NF set corresponding to the first slice that are described above may also be understood as a correspondence between the first slice and the second NF set, a correspondence between the identification information of the first slice and the second NF set corresponding to the first slice, or the like. How to describe a relationship between the first slice and the second NF set is not limited in this embodiment of this application.

For ease of understanding, slicing in this application is simply understood as dividing a physical network of an operator into a plurality of virtual end-to-end networks. The virtual networks (for example, including devices, and access, transport, and core networks in the networks) are logically independent of each other, and a fault in any virtual network does not affect another virtual network. This is not limited. To meet diversified requirements and slice isolation, independent management and operation and maintenance are required for services, and customized service functions and analysis capabilities are provided. Instances of different service types may be deployed on different network slices, and different instances of a same service type may also be deployed on different network slices. A slice may include a group of network functions and subnets. For example, the subnet (R)AN 140, the AMF 137, the SMF 138, and the UPF 139 in FIG. 1 may form a slice. In FIG. 1, only one network function of each type is schematically illustrated. During actual network deployment, for example, there may be a plurality of, dozens of, or hundreds of network functions or sub-networks of each type. Many slices can be deployed in a network. All slices may have different performance to meet requirements of different applications and different vertical industries. It may be understood that the slice described in this application may also be referred to as a network slice, a network slice instance, or the like. A name of the slice is not limited in this application.

The network functions in the operator network shown in FIG. 1 may further include a unified data repository (unified data repository, UDR). For a function of the UDR, refer to the UDM. Details are not described herein.

The network functions in the operator network shown in FIG. 1 may further include a domain name system (domain name system, DNS) (not shown in FIG. 1). The DNS may be configured to configure (or define) internet protocol (internet protocol, IP) addressing between physical network elements, for example, IP addressing between a base station and the AMF.

In FIG. 1, Nnef, Nausf, Nnrf, Npcf, Nudm, Naf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that in FIG. 1, an example in which the terminal device 110 is UE is merely used for description. Names of interfaces between network functions in FIG. 1 are merely examples. During specific implementation, the names of the interfaces in the system architecture may be other names. This is not limited in this application.

A mobility management network function in this application may be the AMF 137 shown in FIG. 1, or may be another network function having the foregoing access and mobility management function AMF 137 in a future communication system. Alternatively, a mobility management network function in this application may be a mobility management entity (mobility management entity, MME) or the like in an LTE system.

For ease of description, in embodiments of this application, the access and mobility management function AMF 137 is referred to as an AMF for short, the unified data management UDM 134 is referred to as a UDM for short, and the terminal device 110 is referred to as UE. In other words, in embodiments of this application, in the following descriptions, all AMFs may be replaced with the mobility management network function, all UDMs may be replaced with the unified data management, and all UEs may be replaced with the terminal device. It may be understood that the replacement method is also applicable to another network function that is not shown.

A service-based architecture and a universal interface are used for the network architecture (for example, the 5G network architecture) shown in FIG. 1. A conventional network element function is split into several self-contained, self-managed, and reusable network function service modules based on a network function virtualization (network function virtualization, NFV) technology. The schematic diagram of the network architecture shown in FIG. 1 may be understood as a schematic diagram of a service-based 5G network architecture in a non-roaming scenario. This application is also applicable to a roaming scenario.

It may be understood that in a secure communication method described in this application, a first NF may include an AMF (for example, a default AMF (default AMF)), an SMF, or the like. A third NF includes a UDM, a UDR, a PCF, or the like. A fourth NF may include a UDR. A second NF may be any NF or network function. A user plane function may include a UPF. For example, steps or functions performed by the first NF described in this application may be implemented by the AMF or the SMF, and steps or functions performed by the third NF may be performed by the UDM, or may be performed by the UDR. For example, the method provided in this application is not limited to the following examples. For example, in some embodiments, the first NF may include a default AMF, and the second NF may include an AMF that the terminal device can interact with. In some other embodiments, the first NF may include an SMF, and the second NF may include a UPF. In some other embodiments, the first NF may include an AMF, and the second NF may include an SMF.

It may be understood that an NF in this application may also be understood as a network element, a node, a network device, or the like.

According to the technical solutions provided in this application, trustworthiness and a security degree of a 5G system can be effectively improved. In some embodiments of this application, a user identifier may be transmitted in a form of a pseudonym between NFs, so that opportunities of widely spreading the user identifier between the NFs are reduced, and security of the user identifier is improved. In some other embodiments of this application, an NF with a high trustworthiness level may transmit data and/or signaling, so that an NF with a low trustworthiness level is prevented from accessing sensitive data, security of service exchange between NFs is improved, network security is improved, and deployment feasibility is high.

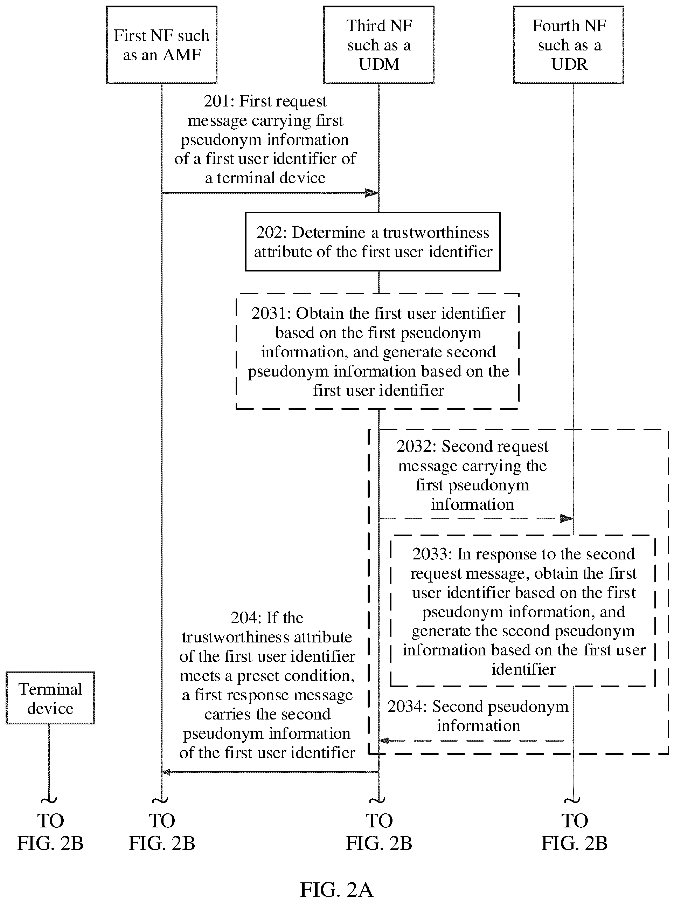

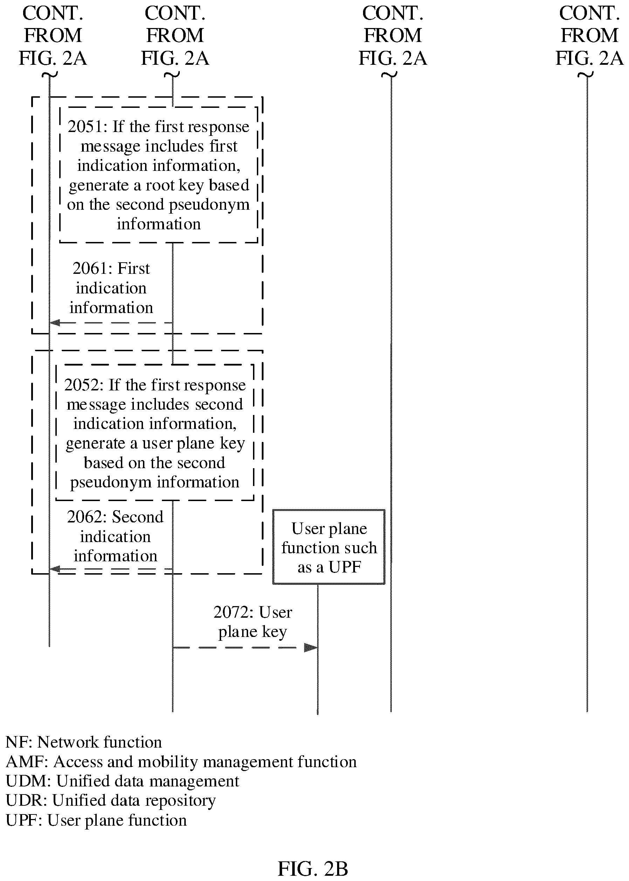

FIG. 2A and FIG. 2B are a schematic flowchart of a secure communication method according to an embodiment of this application. The method may be applied to the communication system shown in FIG. 1. As shown in FIG. 2A and FIG. 2B, the secure communication method includes the following steps.

201: A first NF sends a first request message to a third NF, where the first request message carries first pseudonym information of a first user identifier of a terminal device. Correspondingly, the third NF receives the first request message.

In this embodiment of this application, the first user identifier may include a SUPI, and the first pseudonym information may be used to indicate a pseudonym (anonymous) of the first user identifier; or the first pseudonym information may be used to indicate processed identification information that is different from the first user identifier. In other words, the first pseudonym information may be obtained after the first user identifier is pseudonymized. Optionally, the first pseudonym information may include a subscription concealed identifier (subscription concealed identifier, SUCI), or the first pseudonym information may include a pseudonym identifier, for example, a SUPI*, generated based on a SUPI. It may be understood that, "pseudonym information" described in this embodiment of this application may alternatively be replaced with "replacement information", "user pseudonym information", "anonymous information", a "pseudonym", or the like. A name of the pseudonym information is not limited in this embodiment of this application. It may be understood that the first user identifier including the SUPI in this embodiment of this application is merely an example. During specific implementation, the first user identifier may alternatively be another identifier or the like of the terminal device. This is not limited in this embodiment of this application.

202: The third NF determines a trustworthiness attribute of the first user identifier.

In this embodiment of this application, the trustworthiness attribute of the first user identifier may be used to indicate whether the first user identifier needs to be pseudonymized, for example, whether the third NF needs to pseudonymize the first user identifier; or the trustworthiness attribute of the first user identifier may be used to indicate whether the first user identifier needs to be protected. Because the terminal device may interact with a core device and/or an access device by using the first user identifier, in an understanding manner, that the third NF determines a trustworthiness attribute of the first user identifier may also be understood as that the third NF determines a trustworthiness attribute of the terminal device. The terminal device is a device that uses the first user identifier. This understanding manner is also applicable to another embodiment.

In a possible implementation, the third NF may determine the trustworthiness attribute of the first user identifier based on a subscription level of the first user identifier.

In this embodiment of this application, the subscription level of the first user identifier may be included in subscription data of the first user identifier. The subscription level may be used to distinguish between different types of users. For example, the subscription level of the first user identifier may indicate a VIP or a common user. For another example, the subscription level of the first user identifier may indicate a user having a high privacy requirement or a user having a low privacy requirement. It may be understood that the foregoing subscription levels are merely examples. During actual application, there may be more distinguishing methods and the like. A specific classification manner of the subscription level is not limited in this embodiment of this application.

In a possible implementation, the third NF may determine the trustworthiness attribute of the first user identifier based on a session attribute of the first user identifier.

In this embodiment of this application, the session attribute may be used to distinguish between different sessions conducted by using the first user identifier. For example, the session attribute of the first user identifier may be an audio/video attribute. For another example, the session attribute of the first user identifier may be a video conference or a voice call. For another example, the session attribute of the first user identifier may indicate a session that has a high requirement on data communication security. A specific classification manner of the session attribute is not limited in this embodiment of this application.

In a possible implementation, the third NF determines the trustworthiness attribute of the first user identifier based on an industry requirement of the first user identifier.

In this embodiment of this application, when data and/or signaling are/is exchanged by using the first user identifier, whether the data and/or the signaling need/needs to be protected may be determined based on different industries. In other words, security of the data and/or the signaling may be determined based on the different industries. For example, protection is required for the R&D industry or the financial industry. Therefore, when data and/or signaling of the industry is involved, the data and/or the signaling may be protected. Optionally, the industry requirement may alternatively be that data and/or signaling in a target area (or a target security domain) need/needs to be protected. For example, in a campus, the data and/or the signaling may be protected; and in other campuses, whether to protect the data and/or the signaling may not be limited. Specific classification of the industry requirement is not limited in this embodiment of this application.

Optionally, the third NF may alternatively determine the trustworthiness attribute of the first user identifier based on a trustworthiness attribute of a slice to which the first user identifier belongs. For example, the third NF may store the first user identifier, a slice identifier corresponding to the first user identifier, and a trustworthiness level corresponding to the slice identifier, so that the third NF may determine the trustworthiness attribute of the first user identifier based on the trustworthiness level corresponding to the slice identifier.

204: If the trustworthiness attribute of the first user identifier meets a preset condition, the third NF sends a first response message to the first NF, where the first response message carries second pseudonym information of the first user identifier. Correspondingly, the first NF receives the first response message.

In this embodiment of this application, the preset condition may include a user level condition, an identity privacy protection condition, an industry data security protection condition, or the like. The preset condition may be used to distinguish between trustworthiness attributes of different levels. Therefore, a specific distinguishing manner of the preset condition is not limited in this embodiment of this application. For example, the preset condition may be determined based on a manner of determining the trustworthiness attribute. For example, if the trustworthiness attribute of the first user identifier is determined based on the subscription level of the first user identifier, the preset condition may be that the subscription level indicates a VIP or a user having a high privacy requirement. For another example, if the trustworthiness attribute of the first user identifier is determined based on the session attribute of the first user identifier, the preset condition may be a session having a high requirement on data communication security, for example, a video conference. For another example, if the trustworthiness attribute of the first user identifier is determined based on the industry requirement of the first user identifier, the preset condition may be a user with high industry data security. It may be understood that specific content of the preset condition is not limited in this embodiment of this application.

In this embodiment of this application, the second pseudonym information may be used to indicate a pseudonym (anonymous) of the first user identifier; or the second pseudonym information may be used to indicate processed identification information that is different from the first user identifier. If the trustworthiness attribute of the first user identifier meets the preset condition, when different network elements or network functions interact with each other, the first user identifier may be pseudonymized, to ensure security of the first user identifier. In other words, if the trustworthiness attribute of the first user identifier meets the preset condition, the first user identifier may be exchanged in a form of the second pseudonym information between the different network elements or network functions.

In some embodiments, when the first user identifier includes a SUPI, and the first pseudonym information includes a SUCI, the second pseudonym information may include a SUPI*. In some other embodiments, when the first user identifier includes a SUPI, and the first pseudonym information includes a SUPI*, the second pseudonym information may include a new SUPI*. In some other embodiments, when the first user identifier includes a SUPI, and the first pseudonym information includes a SUPI*, the second pseudonym information may include the SUPI*. Whether a SUPI* carried in the first response message is the same as a SUPI* carried in the first request message is not limited in this embodiment of this application. This description is also applicable to another embodiment of this application.

Optionally, if the trustworthiness attribute of the first user identifier does not meet the preset condition, the third NF sends a first response message to the first NF, where the first response message carries the first user identifier. Correspondingly, the first NF receives the first response message. For example, if the trustworthiness attribute of the first user identifier indicates that the first user identifier is a common user, or the trustworthiness attribute of the first user identifier indicates that a requirement of a session conducted by using the first user identifier is low, the first user identifier may not be pseudonymized when the first user identifier is exchanged between network elements or network functions. It may be understood that, in this embodiment of this application, whether to pseudonymize the first user identifier when the trustworthiness attribute of the first user identifier does not meet the preset condition is not limited.

In a possible implementation, that the third NF sends a first response message to the first NF includes: If a trustworthiness level of the first NF matches a preset level, the third NF sends the first response message to the first NF.

In this embodiment of this application, the preset level is used to measure trustworthiness levels of different NFs, and specific content of the preset level is not limited. For example, the trustworthiness levels include a strong trustworthiness level, a weak trustworthiness level, and an untrustworthiness level, and the preset level may be the weak trustworthiness level or the untrustworthiness level. For another example, the trustworthiness levels include a high trustworthiness level, a low trustworthiness level, and an untrustworthiness level, and the preset level may be the low trustworthiness level or the untrustworthiness level. In other words, when the trustworthiness level of the first NF is low, to protect the first user identifier, the third NF may send pseudonym information (that is, the second pseudonym information) of the first user identifier to the first NF. It may be understood that a specific classification manner of the trustworthiness level is not limited in this embodiment of this application, the preset level may change with the classification manner of the trustworthiness level, and so on.

Optionally, if the trustworthiness level of the first NF does not match the preset level, the third NF sends, to the first NF, a response message carrying the first user identifier. In other words, when the trustworthiness level of the first NF is high, the third NF can trust the first NF, and therefore may send a real user identifier such as the first user identifier to the first NF.

When the trustworthiness attribute of the first user identifier meets the preset condition, and the trustworthiness level of the first NF matches the preset level, it indicates that the first NF cannot be fully trusted. Therefore, to protect the first user identifier and improve security of the user identifier, the third NF may send the second pseudonym information of the first user identifier to the first NF with a low trustworthiness level. However, when the trustworthiness attribute of the first user identifier meets the preset condition, and the trustworthiness level of the first NF does not match the preset level, it indicates that the first NF is trustworthy. Therefore, the third NF may send the first user identifier to the first NF.

In a possible implementation, that the third NF sends a first response message to the first NF includes: If a trustworthiness level of a security domain to which the first NF belongs matches a preset level, the third NF sends the first response message to the first NF.

In this embodiment of this application, trustworthiness levels of different NFs may be distinguished, and trustworthiness levels of different security domains may also be distinguished. For example, a first security domain, a second security domain, and the like may be distinguished, and a trustworthiness level of the first security domain is different from a trustworthiness level of the second security domain. If the first NF is located in the first security domain, and the first security domain has a weak trustworthiness level, it indicates that the security domain in which the first NF is located cannot be fully trusted. Therefore, the third NF may send the second pseudonym information of the first user identifier to the first NF. Alternatively, if a first area has a strong trustworthiness level (for example, the trustworthiness level does not match the preset level), it indicates that the security domain in which the first NF is located is trustworthy. Therefore, the third NF may send a real user identifier such as the first user identifier to the first NF.

Optionally, in addition to the first security domain and the second security domain that are described above, a third security domain and the like may be further included. Trustworthiness levels of the first security domain, the second security domain, and the third security domain are different. How to specifically classify the security domain is not limited in this embodiment of this application. How to specifically classify the trustworthiness level corresponding to each security domain is not limited either.

In a possible implementation, before that the third NF sends a first response message to the first NF, the method shown in FIG. 2A and FIG. 2B may further include the following step:

2031: The third NF may obtain the first user identifier based on the first pseudonym information, and generate the second pseudonym information based on the first user identifier.

Optionally, when the first pseudonym information is a SUCI, the third NF may obtain a SUPI based on the SUCI, and then generate new second pseudonym information such as a new SUPI* based on the SUPI. Optionally, when the first pseudonym information is a SUPI*, the third NF may obtain a SUPI based on a correspondence between the SUPI* and the SUPI, and then generate new second pseudonym information such as a new SUPI* based on the SUPI. Optionally, when the first pseudonym information is a SUPI*, the first response message may further carry the SUPI*, in other words, the third NF may further continue to use the existing SUPI*. For example, the third NF may determine, according to a local policy, whether to continue to use the existing SUPI* or use the new SUPI*. The local policy such as the SUPI* may have a specific validity period. Within the validity period of the SUPI*, the third NF may continue to use the SUPI*. Beyond the validity period of the SUPI*, the third NF may use the new SUPI*. It may be understood that a specific manner of the local policy is not limited in this embodiment of this application. It may be understood that the descriptions of the SUPI* and the new SUPI* are also applicable to the following embodiments.

The SUPI* is merely a shown pseudonym form, and the pseudonym information of the first user identifier may be in another form or the like. This is not limited in this embodiment of this application. For example, in a method for generating the second pseudonym information by the third NF based on the first user identifier, SUPI*=KDF(SUPI, random number); or SUPI*=KDF(SUPI, random number, serving network ID). The random number may be a random number in an authentication vector. Optionally, a parameter for generating the SUPI* may further include a key Kausf in the authentication vector or Kausf derived based on the authentication vector, where Kausf is shared between UE, a home network AUSF/UDM, and the like.

In this embodiment of this application, the third NF stores a correspondence between the first pseudonym information and the first user identifier, and the third NF may further store a correspondence between the second pseudonym information and the first user identifier. The third NF stores the correspondence, so that when the first NF or another NF sends the pseudonym information of the first user identifier to the third NF, the third NF can obtain the first user identifier based on the correspondence.

It may be understood that the "correspondence" described in this application may also be understood as a "mapping relationship", a "correspondence list", a "mapping list", or the like. This is not limited in this application.

In a possible implementation, before that the third NF sends a first response message to the first NF, the method shown in FIG. 2A and FIG. 2B may further include the following step:
2032: The third NF may send a second request message to a fourth NF, where the second request message carries the first pseudonym information. Correspondingly, the fourth NF receives the second request message.
2033: In response to the second request message, the fourth NF obtains the first user identifier based on the first pseudonym information, and generates the second pseudonym information based on the first user identifier.

In this embodiment of this application, the fourth NF may store the correspondence between the first user identifier and the pseudonym information of the first user identifier. Therefore, the third NF sends the second request message to the fourth NF, so that the fourth NF can generate the second pseudonym information in response to the second request message. Optionally, when the first pseudonym information is a SUCI, the fourth NF may obtain a SUPI based on the SUCI, and then generate new second pseudonym information such as a new SUPI* based on the SUPI. Optionally, when the first pseudonym information is a SUPI*, the fourth NF may obtain a SUPI based on a correspondence between the SUPI* and the SUPI, and then generate new second pseudonym information such as a new SUPI* based on the SUPI. Optionally, the fourth NF may further continue to use an existing SUPI* according to a local policy. It may be understood that for a method for generating the new second pseudonym information such as the new SUPI* by the fourth NF based on the first user identifier such as the SUPI, refer to the generation method of the third NF. Details are not described herein again.

2034: The fourth NF sends the second pseudonym information to the third NF. Correspondingly, the third NF receives the second pseudonym information.

Optionally, after the third NF sends the second request message to the fourth NF, the fourth NF may further send the correspondence between the first pseudonym information and the first user identifier to the third NF. Therefore, after receiving the correspondence, the third NF may obtain the first user identifier based on the correspondence, and further generate the second pseudonym information based on the first user identifier.

With reference to the foregoing method for generating the second pseudonym information by the third NF, in this embodiment of this application, a UDM may store the correspondence between the first user identifier and the first pseudonym information, and/or the correspondence between the first user identifier and the second pseudonym information. Alternatively, a UDR may store the correspondence between the first user identifier and the first pseudonym information, and/or the correspondence between the first user identifier and the second pseudonym information. Optionally, when both the UDM and the UDR store the foregoing correspondences, whether the third NF performs step 2031 described above or performs step 2032 to step 2034 described above is not limited in this embodiment of this application. Optionally, when the UDM or the UDR stores the correspondence, the third NF may perform step 2031 or perform step 2032 to step 2034 based on different NFs that store the correspondence.

As described above, the first response message carries the second pseudonym information. Optionally, the first response message may further carry other information. Based on different other information carried in the first response message, this embodiment of this application further provides several methods.

### Method 1:

The first response message may further carry a root key Kamf. The root key is generated by the third NF based on a SUPI, for example, Kamf=KDF(SUPI, another parameter). The another parameter is not limited in this embodiment of this application. Because the UE also generates the root key based on the SUPI, for example, Kamf=KDF(SUPI, another parameter), the UE is not affected in this case. The KDF algorithm herein may be a key derivation algorithm or the like defined in a 3GPP standard, for example, an HMAC-SHA256 algorithm. The KDF algorithm is not limited in this embodiment of this application.

Alternatively, the root key may be generated by the third NF based on a SUPI*, for example, Kamf=KDF2(SUPI*, another parameter 2). The another parameter 2 is not limited in this embodiment of this application. The UE generates the root key based on a SUPI, for example, Kamf=KDF(SUPI, another parameter 1). To ensure that the UE is not affected, herein, a key derivation algorithm KDF1 used by the third NF (or the fourth NF) to generate the SUPI* based on the SUPI and the key derivation algorithm KDF2 used by the third NF to generate the root key Kamf based on the SUPI* need to meet the following condition: The root key Kamf generated by the third NF based on the SUPI* is equal to the root key Kamf generated by the UE based on the SUPI, that is, Kamf=KDF(SUPI, another parameter 1)=KDF2(SUPI*, another parameter 2)=KDF2(KDF1 (SUPI, another parameter 1), another parameter 2). In this case, the KDF2 may be the same as or different from the KDF1. This is not limited in this embodiment of this application. It may be understood that the foregoing root key generation method is merely an example, and should not be understood as a limitation on this embodiment of this application.

In this case, the method shown in FIG. 2A and FIG. 2B may further include: If the first response message further carries the root key Kamf, the first NF may further generate a user plane key or the like based on the root key. A method for applying the root key by the first NF is not limited in this embodiment of this application.

### Method 2:

The first response message may further carry third indication information, and the third indication information is used to indicate the first NF to generate a root key based on the second pseudonym information.

A specific indication form of the third indication information is not limited in this embodiment of this application. For example, 1-bit information may be used to indicate that the first response message carries the third indication information. For example, "1" may indicate that the first response message carries the third indication information. For example, 2-bit information may alternatively be used to indicate whether the first response message carries indication information and whether the carried indication information is the third indication information. It may be understood that the foregoing is merely an example, and this is not limited in this application.

With reference to the third indication information, the method shown in FIG. 2A and FIG. 2B may further include: If the first response message further carries the third indication information, the first NF generates the root key Kamf based on the second pseudonym information.

For example, Kamf=KDF2(SUPI*, another parameter 2). The another parameter 2 is not limited in this embodiment of this application. The UE generates the root key based on a SUPI, for example, Kamf=KDF(SUPI, another parameter 1). To ensure that the UE is not affected, herein, a key derivation algorithm KDF1 used by the third NF (or the fourth NF) to generate the SUPI* based on the SUPI and the key derivation algorithm KDF2 used by the first NF to generate the root key Kamf based on the SUPI* need to meet the following condition: The root key Kamf generated by the first NF based on the SUPI* is equal to the root key Kamf generated by the UE based on the SUPI, that is, Kamf=KDF(SUPI, another parameter 1)= KDF2(SUPI*, another parameter 2)=KDF2(KDF1(SUPI, another parameter 1), another parameter 2). The KDF algorithm herein is a key derivation algorithm defined in a 3GPP standard, for example, an HMAC-SHA256 algorithm. In this case, the KDF2 may be the same as or different from the KDF1. This is not limited in this embodiment of this application.

After generating the root key, the first NF may further generate a user plane key or the like based on the root key. A method for applying the root key by the first NF is not limited in this embodiment of this application.

### Method 3:

It may be understood that when the first response message carries the second pseudonym information but does not carry the root key or the third indication information described in the foregoing method 1 and method 2, the method shown in FIG. 2A and FIG. 2B may further include: After receiving the first response message, the first NF generates the root key Kamf based on the second pseudonym information.

For example, Kamf=KDF2(SUPI*, another parameter 2). The another parameter 2 is not limited in this embodiment of this application. The UE generates the root key based on a SUPI, for example, Kamf=KDF(SUPI, another parameter 1). To ensure that the UE is not affected, herein, a key derivation algorithm KDF1 used by the third NF (or the fourth NF) to generate the SUPI* based on the SUPI and the key derivation algorithm KDF2 used by the first NF to generate the root key Kamf based on the SUPI* need to meet the following condition: The root key Kamf generated by the first NF based on the SUPI* is equal to the root key Kamf generated by the UE based on the SUPI, that is, Kamf=KDF(SUPI, another parameter 1)= KDF2(SUPI*, another parameter 2)=KDF2(KDF1(SUPI, another parameter 1), another parameter 2). The KDF algorithm herein is a key derivation algorithm defined in a 3GPP standard, for example, an HMAC-SHA256 algorithm. In this case, the KDF2 may be the same as or different from the KDF1. This is not limited in this embodiment of this application.

After generating the root key, the first NF may further generate a user plane key or the like based on the root key. A method for applying the root key by the first NF is not limited in this embodiment of this application.

It may be understood that specific implementations of the method 1 to the method 3 are also applicable to another embodiment of this application.

The foregoing method 1 to method 3 have no impact on the UE, in other words, the UE may remain unchanged. For example, the UE generates the root key Kamf based on the SUPI, for example, Kamf=KDF(SUPI, another parameter 1), and may further generate the user plane key based on the root key. It may be understood that the UE herein can remain unchanged with respect to a method 4. In the method 4, the UE further needs to receive first indication information, second indication information, and/or the like. Therefore, that the UE remains unchanged in this embodiment of this application should not be understood as a limitation on this embodiment of this application.

### Method 4:

In a possible implementation, the first response message further carries first indication information and/or second indication information, the first indication information is used to indicate to generate the second pseudonym information, and the second indication information is used to indicate to generate a user plane key.

Specific indication forms of the first indication information and the second indication information are not limited in this embodiment of this application. For example, 1-bit information may be used to indicate whether the first response message carries the first indication information or the second indication information. For example, " 1" may indicate that the first response message carries the first indication information, and "0" may indicate that the first response message carries the second indication information. For example, 2-bit information may alternatively be used to indicate whether the first response message carries indication information, and whether the carried indication information is the first indication information or the second indication information. It may be understood that the foregoing is merely an example, and this is not limited in this application.

With reference to the first indication information, the method shown in FIG. 2A and FIG. 2B may further include the following steps.

2051: If the first response message includes the first indication information, the first NF generates a root key based on the second pseudonym information.

After generating the root key, the first NF may further generate the user plane key or the like based on the root key. A method for applying the root key by the first NF is not limited in this embodiment of this application. For how the first NF applies the root key, refer to a related standard or protocol, or the like. For example, Kamf=KDF(SUPI*, another parameter). The another parameter is not limited in this embodiment of this application.

2061: The first NF sends the first indication information to the terminal device. Correspondingly, the terminal device receives the first indication information.

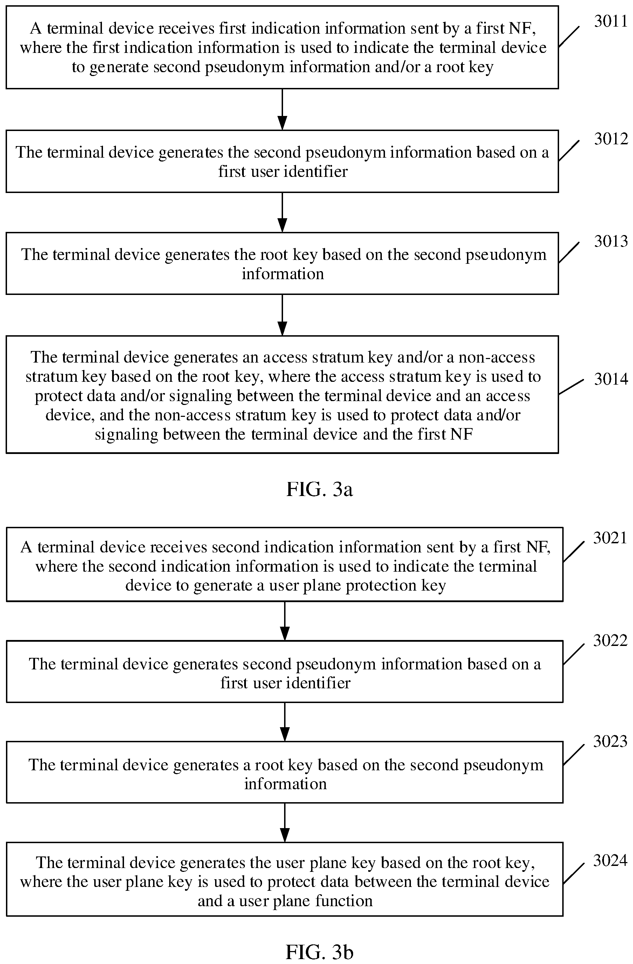

For steps performed by the terminal device after the terminal device receives the first indication information, refer to FIG. 3a. FIG. 3a is a schematic flowchart of a secure communication method according to an embodiment of this application. The method may be applied to the terminal device. As shown in FIG. 3a, the method includes the following steps.

3011: The terminal device receives the first indication information sent by the first NF (an AMF), where the first indication information is used to indicate the terminal device to generate the second pseudonym information.

Optionally, the first indication information may be further used to indicate the terminal device to generate the root key.

3012: The terminal device generates the second pseudonym information based on the first user identifier.

3013: The terminal device generates the root key based on the second pseudonym information.

3014: The terminal device generates an access stratum key and/or a non-access stratum key based on the root key, where the access stratum key is used to protect data and/or signaling between the terminal device and an access device, and the non-access stratum key is used to protect data and/or signaling between the terminal device and the first NF.

In this embodiment of this application, for a method for generating the second pseudonym information by the terminal device based on the first user identifier and a method for generating the root key by the terminal device, refer to the method for generating the second pseudonym information by the third NF and the method for generating the root key by the third NF. Details are not described herein again.

A method for generating the access stratum key by the terminal device is not limited in this embodiment of this application. For example, the access stratum key=KDF(Kamf, another parameter).

According to this embodiment of this application, the access stratum key and/or the non-access stratum key are/is generated based on the second pseudonym information, so that a security level of the data and/or the signaling can be effectively improved, and transmission of the data and/or the signaling can be protected.

With reference to the second indication information, the method shown in FIG. 2A and FIG. 2B may further include the following steps.

2052: If the first response message includes the second indication information, the first NF generates the user plane key based on the second pseudonym information.

A method for generating the user plane key by the terminal device is not limited in this embodiment of this application.

2062: The first NF sends the second indication information to the terminal device. Correspondingly, the terminal device receives the second indication information.

2072: The first NF sends the user plane key to a user plane function. Correspondingly, the user plane function receives the user plane key.

It may be understood that a sequence of step 2062 and step 2072 is not limited in this embodiment of this application.

For steps performed by the terminal device after the terminal device receives the second indication information, refer to FIG. 3b. FIG. 3b is a schematic flowchart of a secure communication method according to an embodiment of this application. The method may be applied to the terminal device. As shown in FIG. 3b, the method includes the following steps:
3021: The terminal device receives the second indication information sent by the first NF, where the second indication information is used to indicate the terminal device to generate a user plane protection key.
3022: The terminal device generates the second pseudonym information based on the first user identifier.
3023: The terminal device generates the root key based on the second pseudonym information.
3024: The terminal device generates the user plane key based on the root key, where the user plane key is used to protect data between the terminal device and a user plane function.

In this embodiment of this application, after the terminal device generates the user plane key, when interacting with the user plane function, the terminal device may protect the data by using the user plane key. This prevents the data from, for example, being tampered with or intercepted by another network element or network function, and ensures security of the data.

It may be understood that in the secure communication methods shown in FIG. 3a and FIG. 3b, the terminal device may be understood as a device that uses the first user identifier. In other words, the first user identifier such as a SUPI may be a user identifier, a number, or the like stored in a terminal device SIM card.

It may be understood that, in the foregoing method, the first user identifier is used as an example. However, during specific application, a second user identifier, a third user identifier, and the like may be further included. The second user identifier or the third user identifier may also be applied to the methods shown in FIG. 2A and FIG. 2B, FIG. 3a, and FIG. 3b.

According to the method shown in FIG. 2A and FIG. 2B, the third NF may determine, based on the trustworthiness attribute of the first user identifier, whether to pseudonymize the first user identifier, so that when the trustworthiness attribute of the first user identifier meets the preset condition, the third NF sends the pseudonymized first user identifier, that is, the second pseudonym information, to the first NF. The first user identifier exists in a form of a pseudonym between different NFs, so that the first user identifier is prevented from, for example, being tampered with or intercepted by an insecure or untrustworthy network element or network function, the first user identifier is effectively protected, and security of the first user identifier is improved.

To understand the method shown in FIG. 2A and FIG. 2B more vividly, the following specifically shows a secure communication method provided in an embodiment of this application.

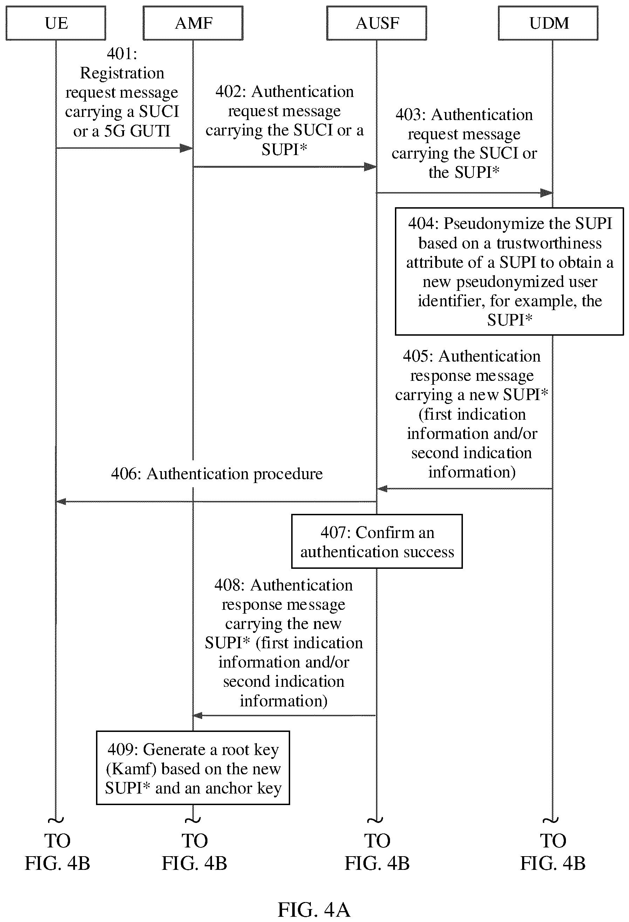

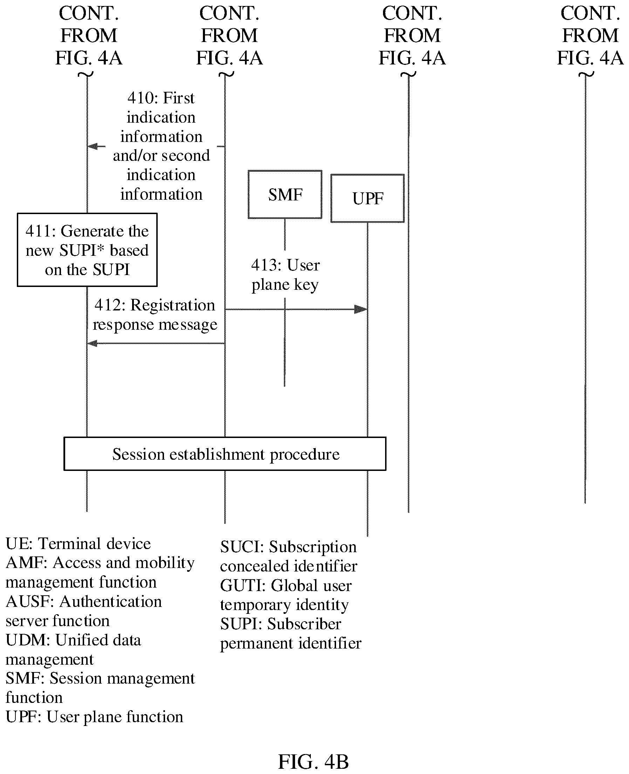

FIG. 4A and FIG. 4B are a schematic diagram of a scenario of the secure communication method according to an embodiment of this application. The method may be applied to the network architecture shown in FIG. 1. It may be understood that the method is described by using a terminal device as UE, a first NF as an AMF, and a third NF as a UDM. In addition, a network function such as an AUSF and a user plane function such as a UPF are further used in the method. In the method, a first user identifier includes a SUPI. Optionally, subscription data of one or more user identifiers is prestored in the UDM, and the subscription data includes a subscription level. In other words, a subscription level of the one or more user identifiers is preconfigured in the UDM.

As shown in FIG. 4A and FIG. 4B, the secure communication method includes the following steps.

401: The UE sends a registration request message to the AMF, where the registration request message carries a SUCI or a 5G global user temporary identity (5G global user temporary identity, 5G GUTI). Correspondingly, the AMF receives the registration request message.

When the UE sends the registration request message to the AMF for the first time, the registration request message may carry the SUCI. When the UE sends the registration request message to the AMF not for the first time, the registration request message may carry the GUTI. For ease of description, that the UE sends the registration request message to the AMF for the first time may be referred to as initial registration for short; and that the UE sends the registration request message to the AMF not for the first time may be referred to as non-initial registration for short.

402: The AMF sends an authentication request message to the AUSF, where the authentication request message carries the SUCI or a SUPI*. Correspondingly, the AUSF receives the authentication request message.

During the initial registration, the authentication request message may carry the SUCI. During the non-initial registration, the authentication request message may carry the SUPI*.

Optionally, the authentication request message may further carry an identifier (identification, ID) of a serving network. The ID of the serving network may be an ID of a network in which the AMF is located.

403: The AUSF sends the authentication request message to the UDM. Correspondingly, the UDM receives the authentication request message.

404: The UDM pseudonymizes a SUPI based on a trustworthiness attribute of the SUPI to obtain a new pseudonymized user identifier, for example, the SUPI*.

It may be understood that for a pseudonymization method of the UDM, refer to the method shown in FIG. 2A and FIG. 2B. Details are not described herein again.

405: The UDM sends an authentication response message to the AUSF, where the authentication response message carries the new pseudonymized user identifier, for example, the SUPI*. Correspondingly, the AUSF receives the authentication response message.

For example, if the authentication request message carries the SUCI, the UDM may obtain the SUPI based on the SUCI, and then generate a new SUPI* based on the SUPI. For example, if the authentication request message carries the SUPI*, the UDM may obtain the SUPI based on a previously stored correspondence (SUPI, SUPI*), and then generate a new SUPI* based on the SUPI. Optionally, the UDM may further continue to use an existing SUPI* (for example, the SUPI* carried in the authentication request message) according to a local policy.

Optionally, the authentication response message may further carry first indication information and/or second indication information. The first indication information may also be understood as pseudonymization protection indication information, and the second indication information may be understood as terminal-to-core network protection indication information.

For example, for step 404, the UDM may perform the following processing based on a trustworthiness attribute in the subscription (for example, the trustworthiness attribute of a subscribed SUPI):

For example, if the trustworthiness attribute in the subscription meets an identity privacy protection requirement, the UDM may determine that the SUPI requires pseudonymization protection. For another example, if the trustworthiness attribute in the subscription meets an industry data security protection requirement, the UDM determines that the SUPI requires pseudonymization protection. For another example, if the trustworthiness attribute in the subscription indicates that the SUPI indicates a common user, the UDM may perform processing according to a normal procedure. For the normal procedure, refer to a related standard or protocol. For example, the UDM may not pseudonymize the SUPI. For another example, if the trustworthiness attribute in the subscription indicates that the SUPI indicates a VIP, the UDM determines that the SUPI requires pseudonymization protection.

Optionally, after the UDM receives the authentication request message, the UDM may further send the authentication request message to the UDR, and the UDR pseudonymizes the SUPI based on the trustworthiness attribute of the SUPI to obtain the new SUPI*. Therefore, the UDR sends the authentication response message to the UDM, where the authentication response message carries the new SUPI*. Optionally, after receiving the authentication request message, the UDR may directly pseudonymize the SUPI to obtain the new SUPI*. Therefore, the UDR sends the authentication response message to the UDM, where the authentication response message carries the new SUPI*. Optionally, the authentication response message sent by the UDR to the UDM may further carry a correspondence between the new SUPI* and the SUPI. In this case, both the UDM and UDR can obtain a real user identifier such as the SUPI.

A manner in which the UDR obtains the SUPI* may be described as follows: For example, if the authentication request message carries the SUCI, the UDR may obtain the SUPI based on the SUCI, and then generate the new SUPI* based on the SUPI. Optionally, if the authentication request message carries the SUPI*, the UDR may obtain the SUPI based on the previously stored correspondence (SUPI, SUPI*), and then generate the new SUPI* based on the SUPI. Optionally, the UDR may further continue to use the existing SUPI* (for example, the SUPI* carried in the authentication request message) according to the local policy.

406: The AUSF continues to perform an authentication procedure on the UE through the AMF.

It may be understood that for the authentication procedure described in step 406, refer to a related standard or protocol, or the like. This is not limited in this embodiment of this application.

407: The AUSF confirms an authentication success.

408: The AUSF sends an authentication response message to the AMF, where the authentication response message carries the new SUPI*. Correspondingly, the AMF receives the authentication response message.

Optionally, the authentication response message may further carry an anchor key. Optionally, the authentication response message may further carry first indication information and/or second indication information. Optionally, integrity protection may be further performed on the first indication information and/or the second indication information by using a shared key, to prevent the first indication information and/or the second indication information from, for example, being maliciously tampered with. The shared key may be understood as a shared key between the UE and the AUSF in an authentication process. In other words, integrity protection may be performed on the first indication information and/or the second indication information based on a message authentication code (message authentication code, MAC) value.

409: The AMF generates a root key (Kamf) based on the new SUPI* and the anchor key.

Optionally, if the authentication response message carries the second indication information, the AMF generates a user plane key based on the root key. The user plane key may also be referred to as a terminal-to-core network protection key. The terminal-to-core network protection key may include a terminal-to-core network encryption key and a terminal-to-core network integrity protection key.

Optionally, when the UDM generates the new SUPI*, the UDM may further generate the root key based on the new SUPI*. Therefore, the authentication response message may further carry the root key, so that the AMF can obtain the root key when receiving the authentication response message.

Optionally, after the AUSF receives the authentication response message, the AUSF may further generate the root key based on the new SUPI*.

410: The AMF sends the first indication information and/or the second indication information to the UE.

411: The UE generates the new SUPI* based on the SUPI.

After the authentication procedure ends, the UE may further generate the anchor key by using a method the same as that of the AUSF. Optionally, if the UE receives the first indication information, the UE may perform integrity protection check on the first indication information by using the shared key between the UE and the AUSF, and then the UE generates the new SUPI*. It may be understood that a method for generating the new SUPI* by the UE may be the same as a method for generating the new SUPI* by the UDM. Further, the UE may further generate the root key Kamf based on the new SUPI*. Optionally, if the UE receives the second indication information, the UE may further generate the user plane key based on the root key.

It may be understood that the first indication information and/or the second indication information described above may be further included in a tenth message. A manner of sending the first indication information and/or the second indication information by the AMF is not limited in this embodiment of this application.

412: The AMF sends a registration response message to the UE. Correspondingly, the UE receives the registration response message.

The registration response message may include a registration accept message.

413: The AMF sends the terminal-to-core network protection key to the UPF through the SMF.

In this embodiment of this application, in a transmission process of data between the UE and the UPF, encryption or integrity protection may be performed on the data by using the terminal-to-core network protection key. Therefore, the data is prevented from being learned of by a weakly trustworthy or untrustworthy NF, and transmission security of the data is improved.

In the method shown in FIG. 4A and FIG. 4B, the root key Kamf is generated by the AMF based on the new SUPI* carried in the authentication response message. In addition, the UE generates the new SUPI* by using the method the same as that of the UDM, and then generates the root key Kamf based on the new SUPI*.

Optionally, after the UDM generates the new SUPI*, the UDM may further generate the root key Kamf based on the new SUPI*. In addition, the authentication response message may include the new SUPI* and the root key Kamf. Therefore, the AMF may directly receive the root key Kamf. In this case, the UE may also generate the new SUPI* by using the method the same as that of the UDM, and then generate the root key Kamf based on the new SUPI*. Optionally, the UDM may generate the new SUPI* by using a security algorithm f1. In addition, the authentication response message includes the new SUPI*, and the AMF generates the root key Kamf by using a security algorithm f2 and the new SUPI*. It is ensured, by using the security algorithms f1 and f2, that the root key Kamf generated by the UE based on the new SUPI* is equal to the root key Kamf generated by the AMF.

It may be understood that the first request message in FIG. 2A and FIG. 2B may be understood as the authentication request message in FIG. 4A and FIG. 4B, and the first response message in FIG. 2A and FIG. 2B may be understood as the authentication response message in FIG. 4A and FIG. 4B. The first indication information in FIG. 2A and FIG. 2B may be understood as the pseudonymization protection indication information in FIG. 4A and FIG. 4B, and the second indication information in FIG. 2A and FIG. 2B may be understood as the terminal-to-core network protection indication information in FIG. 4A and FIG. 4B. The user plane key shown in FIG. 2A and FIG. 2B may be understood as the terminal-to-core network protection key in FIG. 4A and FIG. 4B.

According to the technical solutions provided in embodiments of this application, the SUPI is prevented from, for example, being tampered with or intercepted by an insecure or untrustworthy network element or network function, the SUPI is effectively protected, and security of the SUPI is improved. In addition, the authentication response message includes the terminal-to-core network protection indication information, to improve security of data exchange between the UE and the UPF.

In the methods shown in FIG. 2A and FIG. 2B to FIG. 4A and FIG. 4B, it is determined, depending on whether a trustworthiness attribute of a user identifier meets a preset condition, whether to pseudonymize the user identifier. An embodiment of this application further provides a secure communication method. In the method, a related network element or network function may be determined based on a trustworthiness level, to provide a service for a terminal device by using the related network element or network function.

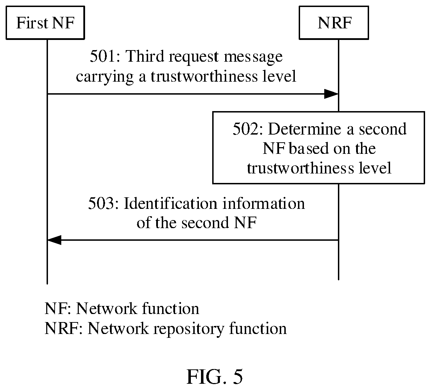

FIG. 5 is a schematic flowchart of a secure communication method according to an embodiment of this application. The method may be applied to the network architecture shown in FIG. 1. As shown in FIG. 5, the secure communication method includes the following steps.

501: A first network function (network function, NF) sends a third request message to an NRF, where the third request message carries a trustworthiness level. Correspondingly, the NRF receives the third request message.

The first NF may also be understood as a consumer (consumer NF).

In this embodiment of this application, the trustworthiness level may be used to indicate a trustworthiness degree of a network element or a network function. For example, a trustworthiness degree of an NF varies with a trustworthiness level. Optionally, the trustworthiness level may be in direct proportion to the trustworthiness degree. For example, the trustworthiness level may be classified into strong trustworthiness, weak trustworthiness, or untrustworthiness. For another example, the trustworthiness level may be classified into a level 1, a level 2, or a level 3. A higher level indicates a higher trustworthiness degree. A specific classification manner of the trustworthiness level is not limited in this embodiment of this application.

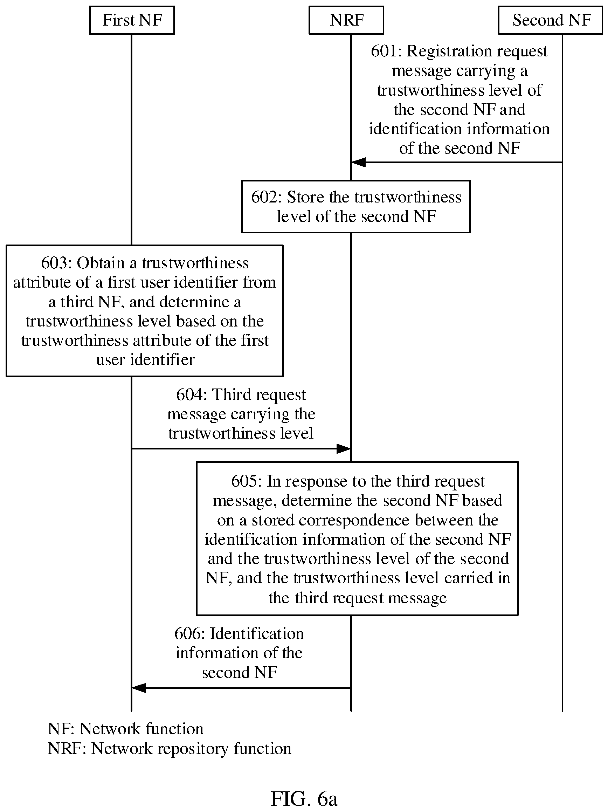

Optionally, the trustworthiness level described above may be a trustworthiness level of an NF. Alternatively, the trustworthiness level described above may be a trustworthiness level or the like of a slice. Based on different trustworthiness levels, embodiments of this application provide several different methods, as shown in FIG. 6a to FIG. 6c respectively.

In this embodiment of this application, for example, the third request message may be a message for requesting to query for an NF that can be accessed by a terminal device. The NF that can be accessed by the terminal device may include an AMF, an SMF, a UPF, or the like.

502: In response to the third request message, the NRF may determine a second NF based on the trustworthiness level.

The second NF may also be understood as a producer (producer NF), or may also be understood as a target NF (target NF), or the like.

The second NF may represent one NF, or the second NF may represent a plurality of NFs.

Optionally, the second NF may be one or more NFs corresponding to the trustworthiness level. Alternatively, the second NF may be one or more NFs corresponding to the trustworthiness level and an NF type requested by the first NF.

Methods for determining the second NF by the NRF are different based on different trustworthiness levels, and may be shown in FIG. 6a to FIG. 6c respectively.

503: The NRF sends identification information of the second NF to the first NF. Correspondingly, the first NF receives the identification information of the second NF.

The identification information of the second NF may include, for example, a type (an NF type) of the second NF, an instance (an NF instance) of the second NF, an identifier (an NF set ID) of the second NF set, or an IP address of the second NF. A specific identifier indicated by the identification information is not limited in this embodiment of this application. After receiving the identification information of the second NF, the first NF may perform service exchange with the second NF.

Optionally, the identification information of the second NF may be included in a third response message.

In this embodiment of this application, the NRF determines the second NF based on the trustworthiness level, so that after the first NF receives the identification information of the second NF, the first NF exchanges data and/or signaling with the second NF. Therefore, the first NF may interact with an NF (that is, the second NF) corresponding to the trustworthiness level. In an aspect, a requirement of the first NF on the trustworthiness level can be met. In another aspect, the first NF exchanges data and/or signaling with an NF (for example, the second NF) with a high trustworthiness level. This improves security of exchange between the first NF and the second NF.

Based on different trustworthiness levels shown in FIG. 5, embodiments of this application further provide several methods, which are respectively described as follows:

### Method 1:

FIG. 6a is a schematic flowchart of a secure communication method according to an embodiment of this application. As shown in FIG. 6a, the method includes the following steps.

It may be understood that, in the method, an NRF stores a trustworthiness level of one or more NFs (including a second NF). The following uses the second NF as an example to describe the method provided in this embodiment of this application. However, the method described below is applicable to not only the second NF but also another NF and the like. As shown in FIG. 6a, a method for storing the trustworthiness level of the one or more NFs in the NRF includes step 601 and step 602.

601: The NRF receives a registration request message sent by the second NF, where the registration request message carries a trustworthiness level of the second NF Correspondingly, the NRF receives the registration request message.

The registration request message further carries identification information of the second NF.

602: The NRF stores the trustworthiness level of the second NF.

In the method, when sending the registration request message to the NRF, the second NF may send the trustworthiness level of the second NF to the NRF. For a trustworthiness level classification method, refer to the method shown in FIG. 5. Details are not described herein again.

How the NRF stores the trustworthiness level of the second NF and a specific location at which the trustworthiness level of the second NF is stored are not limited in this embodiment of this application. For example, the NRF may store a correspondence between the identification information and the trustworthiness level of the second NF, for example, (NF instance, NF type, trustworthiness level). For example, the NRF may store a trustworthiness level of an NF in a manner in which one NF corresponds to one trustworthiness level; or the NRF may store trustworthiness levels of a plurality of NFs in a manner in which the plurality of NFs correspond to one trustworthiness level.

The foregoing is a method for dynamically obtaining a trustworthiness level of an NF provided in this embodiment of this application. This embodiment of this application further provides a method for statically obtaining a trustworthiness level of an NF. For example, the NRF preconfigures a trustworthiness level of one or more NFs, and stores the trustworthiness level of the one or more NFs. For example, the NRF preconfigures the trustworthiness level of the second NF, and stores the trustworthiness level of the second NF. For example, an operator may preconfigure the trustworthiness level of the second NF for the NRF. It may be understood that a method for configuring the trustworthiness level of the one or more NFs in the NRF is not limited in this embodiment of this application.

In the foregoing method for statically or dynamically obtaining the trustworthiness level of the NF, the NRF may store identification information of the one or more NFs and the trustworthiness level of the one or more NFs. For example, the NRF may store identification information of an NF a and a trustworthiness level of the NF a. Alternatively, the NRF may store identification information of an NF b and a trustworthiness level of the NF b. Alternatively, the NRF may store identification information of an NF c and a trustworthiness level of the NF c. The NF a, the NF b, and the NF c are only used to distinguish between different NFs and do not have other specific meanings. It may be understood that, that the NRF may store the identification information of the one or more NFs and the trustworthiness level of the one or more NFs above may also be understood as that the NRF stores the one or more NFs and the trustworthiness level of the one or more NFs; or may also be understood as that the NRF stores a correspondence between the identification information and the trustworthiness level of the one or more NFs, and the like. A specific description method is not limited in this embodiment of this application.

It may be understood that the foregoing descriptions of storing the identification information of the NF and the trustworthiness level of the NF in the NRF are also applicable to another embodiment of this application.

603: A first NF obtains a trustworthiness attribute of a first user identifier from the third NF, and determines a trustworthiness level based on the trustworthiness attribute of the first user identifier.

In this embodiment of this application, the trustworthiness attribute of the first user identifier may be used to indicate whether the first user identifier needs to be pseudonymized, and so on. If the first user identifier needs to be pseudonymized, it indicates that the first user identifier requires a higher trustworthiness level. Therefore, after obtaining the trustworthiness attribute of the first user identifier, the third NF may determine the trustworthiness level based on the trustworthiness attribute of the first user identifier. For how the third NF obtains the trustworthiness attribute of the first user identifier, refer to the method shown in FIG. 2A and FIG. 2B. Details are not described herein again.

For example, the first NF may perform step 603 when the first NF receives a network access request message sent by a terminal device. For example, the first NF may perform step 603 when the first NF receives a session establishment request message sent by the terminal device. Alternatively, the first NF may perform step 603 or the like in another scenario. This is not limited in this embodiment of this application.

604: The first NF sends a third request message to the NRF, where the third request message carries a trustworthiness level. Correspondingly, the NRF receives the third request message.

605: In response to the third request message, the NRF determines the second NF based on the stored correspondence between the identification information of the second NF and the trustworthiness level of the second NF, and the trustworthiness level carried in the third request message.

That the NRF stores the identification information and the trustworthiness level of the one or more NFs may also be understood as that the NRF stores the correspondence between the identification information of the one or more NFs and the trustworthiness level of the one or more NFs; or may also be understood that the NRF stores the identification information of the NF and the trustworthiness level of the NF. For a method for storing the identification information of the NF and the trustworthiness level of the NF in the NRF, refer to related descriptions of step 601 and step 602. Details are not described herein again.

In some implementations, the trustworthiness level of the second NF may be equal to the trustworthiness level carried in the third request message. In some other implementations, the trustworthiness level of the second NF may alternatively be higher than the trustworthiness level carried in the third request message, and so on. This is not limited in this application.

For example, the NRF may store (NF 2, trustworthiness level being, for example, a high level), (NF 3, trustworthiness level being, for example, a high level), (NF 4, trustworthiness level being, for example, a weak level), and (NF 5, trustworthiness level being, for example, an untrustworthiness level). The trustworthiness level carried in the third request message is a high trustworthiness level. In this case, the NRF may determine, from the stored trustworthiness levels of the NFs, an NF with a high trustworthiness level, for example, the NF 2 and/or the NF 3, as the second NF. It may be understood that the NF 2, the NF 3, the NF 4, and the NF 5 in the foregoing example may be NFs of a same type.

Optionally, the NRF may further store trustworthiness levels of various different types of NFs. In this case, when determining the second NF, the NRF may further determine the second NF based on the NF type requested by the first NF. For example, if the first NF needs to request an AMF that can be accessed by the terminal device, the second NF is an NF corresponding to the trustworthiness level carried in the third request message.

Optionally, when the trustworthiness level carried in the third request message is a weak trustworthiness level, the trustworthiness level of the second NF may corresponding to the weak trustworthiness level; or the trustworthiness level of the second NF may be higher than the weak trustworthiness level.

It may be understood that, in this embodiment of this application, a trustworthiness level of an NF may also be understood as a trustworthiness level corresponding to an identifier of the NF.

606: The NRF sends the identification information of the second NF to the first NF. Correspondingly, the first NF receives the identification information of the second NF.

In the embodiment of this application, the NRF stores trustworthiness levels of NFs (including the second NF), so that the first NF can request an NF with a high trustworthiness level from the NRF. Therefore, the first NF may exchange data and/or signaling with the NF with the high trustworthiness level (for example, the second NF), to ensure security of the data and/or the signaling.

### Method 2:

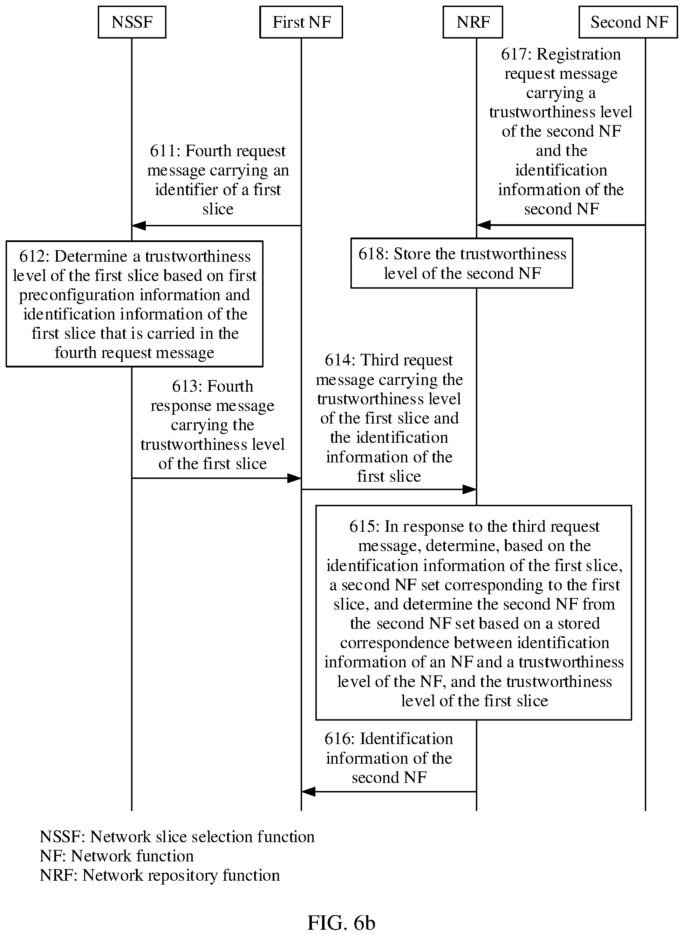

FIG. 6b is a schematic flowchart of a secure communication method according to an embodiment of this application. As shown in FIG. 6b, the method includes the following steps.

611: A first NF sends a fourth request message to an NSSF, where the fourth request message carries identification information of a first slice. Correspondingly, the NSSF receives the fourth request message.

A specific type of the fourth request message is not limited in this embodiment of this application.

612: The NSSF determines a trustworthiness level of the first slice based on first preconfiguration information and the identification information of the first slice that is carried in the fourth request message.

The first preconfiguration information is configured by an operator, another NF, or the like. This is not limited in this application. The first preconfiguration information may store identification information of a slice and a trustworthiness level of the slice. For example, the first preconfiguration information may store a correspondence between identification information and a trustworthiness level of one or more slices. The first preconfiguration information includes the identification information of the first slice and the trustworthiness level of the first slice.

In the embodiment of this application, the trustworthiness level of the first slice may also be understood as a trustworthiness level corresponding to the identification information of the first slice. Trustworthiness levels of a plurality of slices may also be understood as trustworthiness levels corresponding to identification information of the plurality of slices. The plurality of slices may correspond to one trustworthiness level, or the plurality of slices may correspond to a plurality of trustworthiness levels. For example, one slice corresponds to one trustworthiness level, or two slices correspond to one trustworthiness level. How the NSSF stores a relationship between a slice and a trustworthiness level is not limited in this embodiment of this application.

After the NSSF receives the fourth request message, the NSSF may search, based on the identification information of the first slice, the stored trustworthiness level of the one or more slices for the trustworthiness level corresponding to the first slice, to obtain the trustworthiness level of the first slice.

613: The NSSF sends a fourth response message to the first NF, where the fourth response message carries the trustworthiness level of the first slice. Correspondingly, the first NF receives the fourth response message.

That the fourth response message carries the trustworthiness level of the first slice may also be understood as that the fourth response message carries the trustworthiness level corresponding to the identification information of the first slice. The fourth response message further carries the identification information of the first slice.

614: The first NF sends a third request message to an NRF, where the third request message carries the trustworthiness level of the first slice and the identification information of the first slice. Correspondingly, the NRF receives the third request message.

615: In response to the third request message, the NRF determines, based on the identification information of the first slice, a second NF set corresponding to the first slice; and determines a second NF from the second NF set based on a stored correspondence between identification information of an NF and a trustworthiness level of the NF, and the trustworthiness level of the first slice.

In this embodiment of this application, the NRF may store a correspondence between identification information and a trustworthiness level of one or more NFs. Alternatively, it may be understood that the NRF stores identification information of one or more NFs and a trustworthiness level of the one or more NFs. Therefore, the NRF may determine the second NF from the second NF set based on the trustworthiness level of the first slice. It may be understood that a quantity of NFs included in the second NF set is not limited in this embodiment of this application. For example, the second NF set may include one NF such as the second NF. For another example, the second NF set may alternatively include a plurality of NFs, and the plurality of NFs include the second NF. It may be understood that the descriptions of the second NF set are also applicable to another embodiment of this application.

616: The NRF sends identification information of the second NF to the first NF. Correspondingly, the first NF receives the identification information of the second NF.

In a possible implementation, before step 615, the method shown in FIG. 6b may further include the following steps.

617: The NRF receives a registration request message sent by the second NF, where the registration request message carries a trustworthiness level of the second NF Correspondingly, the NRF receives the registration request message.

The registration request message further carries the identification information of the second NF.

618: The NRF stores the trustworthiness level of the second NF.

It may be understood that for specific implementations of step 617 and step 618, refer to step 601 and step 602 shown in FIG. 6a. Details are not described herein again.

It may be understood that for a method that is not described in detail in this embodiment of this application, refer to the methods shown in FIG. 5 and FIG. 6a. Details are not described herein again.

### Method 3:

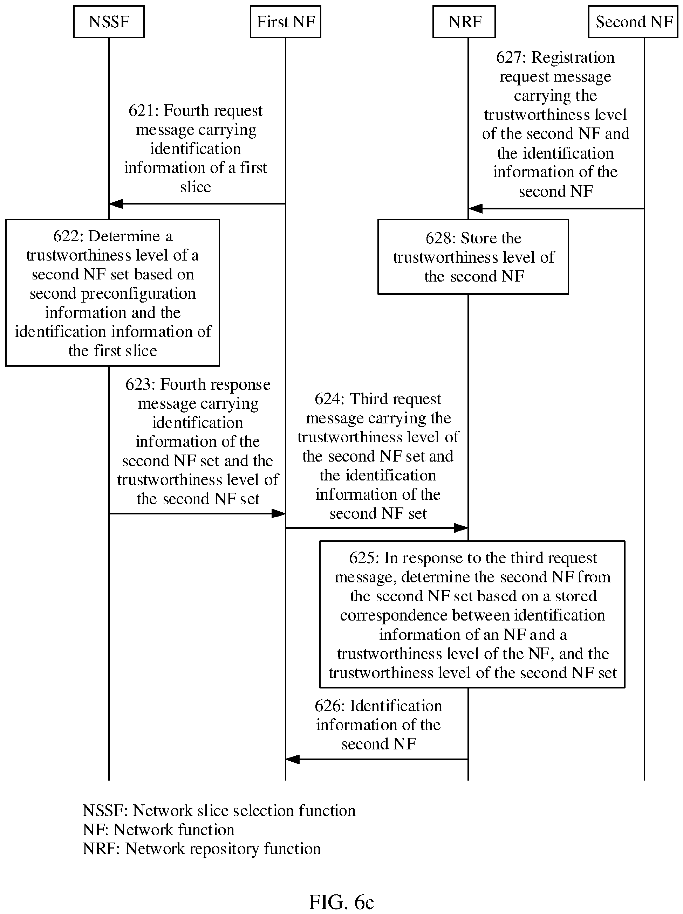

FIG. 6c is a schematic flowchart of a secure communication method according to an embodiment of this application. As shown in FIG. 6c, the method includes the following steps.

621: A first NF sends a fourth request message to an NSSF, where the fourth request message carries identification information of a first slice. Correspondingly, the NSSF receives the fourth request message.

A specific type of the fourth request message is not limited in this embodiment of this application.

622: The NSSF determines a trustworthiness level of a second NF set based on second preconfiguration information and the identification information of the first slice.

The second preconfiguration information is configured by an operator, another NF, or the like. This is not limited in this application. The second preconfiguration information includes identification information of an NF set and a trustworthiness level of the NF set. For example, the second preconfiguration information may include a correspondence between identification information of the second NF set and the trustworthiness level of the second NF set. The second preconfiguration information may further include identification information of a slice and identification information of an NF set. For example, the second preconfiguration information may include a correspondence between the identification information of the first slice and the identification information of the second NF set.

Optionally, one slice may correspond to one or more NF sets, and one NF set may correspond to one trustworthiness level.

After receiving the fourth request message, the NSSF may determine, based on the identification information of the first slice that is carried in the fourth request message, an NF set, for example, the second NF set, corresponding to the first slice, and then determine the trustworthiness level corresponding to the second NF set.

623: The NSSF sends a fourth response message to the first NF, where the fourth response message carries the identification information of the second NF set and the trustworthiness level of the second NF set. Correspondingly, the first NF receives the fourth response message.

624: The first NF sends a third request message to an NRF, where the third request message carries the trustworthiness level of the second NF set and the identification information of the second NF set. Correspondingly, the NRF receives the third request message.

625: In response to the third request message, the NRF determines a second NF from the second NF set based on a stored correspondence between identification information of an NF and a trustworthiness level of the NF, and the trustworthiness level of the second NF set.

626: The NRF sends identification information of the second NF to the first NF. Correspondingly, the first NF receives the identification information of the second NF.

In a possible implementation, before step 625, the method shown in FIG. 6b may further include the following steps.

627: The NRF receives a registration request message sent by the second NF, where the registration request message carries a trustworthiness level of the second NF Correspondingly, the NRF receives the registration request message.

The registration request message further carries the identification information of the second NF.

628: The NRF stores the trustworthiness level of the second NF.

It may be understood that for specific implementations of step 627 and step 628, refer to step 601 and step 602 shown in FIG. 6a. Details are not described herein again.

It may be understood that for a method that is not described in detail in this embodiment of this application, refer to the methods shown in FIG. 5 to FIG. 6b. Details are not described herein again.

### Method 4:

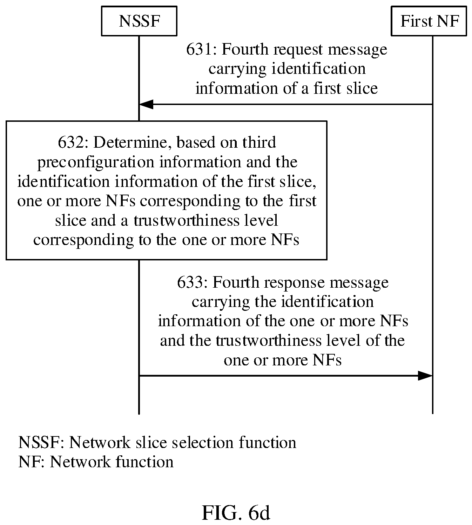

FIG. 6d is a schematic flowchart of a secure communication method according to an embodiment of this application. As shown in FIG. 6d, the method includes the following steps.

631: A first NF sends a fourth request message to an NSSF, where the fourth request message carries identification information of a first slice. Correspondingly, the NSSF receives the fourth request message.

632: The NSSF determines, based on third preconfiguration information and the identification information of the first slice, one or more NFs corresponding to the first slice and a trustworthiness level corresponding to the one or more NFs.

The third preconfiguration information includes a correspondence between identification information of a slice and identification information of an NF. In other words, the third preconfiguration information may include a correspondence between one or more slices and NFs. Optionally, one slice may correspond to one or more NFs, and one NF may correspond to one trustworthiness level.

Optionally, for example, the plurality of NFs correspond to a same trustworthiness level, or the plurality of NFs correspond to different trustworthiness levels. This is not limited in this embodiment of this application. For example, the first slice may correspond to an NF 7 (a high trustworthiness level), an NF 8 (a high trustworthiness level), and an NF 9 (a high trustworthiness level). For another example, the first slice may correspond to an NF 7 (a high trustworthiness level), an NF 8 (a high trustworthiness level), and an NF 10 (a weak trustworthiness level).

633: The NSSF sends a fourth response message to the first NF, where the fourth response message carries identification information of one or more NFs and a trustworthiness level of the one or more NFs. Correspondingly, the first NF receives the fourth response message.

In the method shown in this embodiment of this application, a difference from FIG. 6c lies in that, the fourth response message in FIG. 6c carries the trustworthiness level of the second NF set, while the fourth response message in FIG. 6d carries the trustworthiness level of the one or more NFs. In other words, the trustworthiness level in FIG. 6c is specific to a set. Whether a trustworthiness level of one or more corresponding NFs in the second NF set is the same is not limited in this embodiment of this application. In other words, the trustworthiness level of the NF included in the second NF set may alternatively be lower than the trustworthiness level carried in the third request message. However, in FIG. 6d, the fourth response message directly carries the identification information of the one or more NFs and the trustworthiness level of the one or more NFs. Therefore, the first NF may directly select one NF from the one or more NFs as a second NF. To be specific, after the first NF receives the fourth response message, the first NF may determine, based on the trustworthiness level of the one or more NFs, the second NF that interacts with the first NF.

In this embodiment of this application, the NSSF sends the trustworthiness level of the one or more NFs to the first NF, so that the first NF can quickly determine the second NF. Implementation is simple and efficiency is high.

It may be understood that the first NF and the second NF described above are merely examples. During actual application, more NFs may be involved in a scenario in which a terminal device needs to access a network or establish a session connection, or the like. In other words, the technical solution provided in this embodiment of this application is applicable to more NFs.

According to the technical solutions provided in FIG. 5 to FIG. 6d, in a scenario in which the terminal device accesses a network or establishes a session connection, or the like, the first NF interacts with the NRF or the NSSF, to obtain the second NF that interacts with the first NF and that has a high trustworthiness level. Security of service exchange is ensured during related processing.

This application further provides a secure communication method. The method is described as follows:
(1) A first network function (network function, NF) sends a fifth request message to a domain name system (domain name system, DNS), where the fifth request message carries domain name information and a trustworthiness level. Correspondingly, the DNS receives the fifth request message.
(2) In response to the fifth request message, the DNS determines a second NF based on the domain name information and the trustworthiness level; and the DNS sends identification information of the second NF to the first NF.

In this embodiment of this application, the DNS may determine the second NF based on a stored correspondence between the domain name information and the identification information and a stored correspondence between the identification information and the trustworthiness level (or a stored correspondence between the domain name information and the trustworthiness level). For example, a correspondence between domain name information (or identification information) of one or more NFs and a trustworthiness level of the one or more NFs may be configured in the DNS. The DNS determines the second NF based on the trustworthiness level, so that the first NF may receive the identification information of the second NF, where the identification information of the second NF may include an IP address or the like of the second NF. Therefore, the first NF may interact with an NF (that is, the second NF) corresponding to the trustworthiness level. In an aspect, a requirement of a user identifier corresponding to a terminal device on the trustworthiness level can be met. In another aspect, the first NF exchanges data and/or signaling with an NF (for example, the second NF) with a high trustworthiness level. This improves security of exchange between the first NF and the second NF.

It may be understood that the identification information of the second NF may be carried in a fifth response message or the like. This is not limited in this embodiment of this application.

In this embodiment of this application, the first NF may further include an access device or the like, and the second NF may include an AMF or the like.

It may be understood that the methods shown in FIG. 5 to FIG. 6d may be further combined with the methods shown in FIG. 2A and FIG. 2B to FIG. 4A and FIG. 4B. For example, when the trustworthiness attribute of the first user identifier meets the preset condition, the first user identifier may exist in a form of a pseudonym between different NFs. In addition, when the UE interacts with the different NFs, the first NF may select an NF with a high trustworthiness level, for example, the second NF for interaction, and when the first NF interacts with the second NF, the first user identifier may exist in a form of a pseudonym (or a real user identifier) between the first NF and the second NF. Therefore, not only security of the first user identifier is improved, but also exchange security or reliability of data and/or signaling is effectively ensured. Further, when the UE interacts with the UPF, data and/or signaling may be further encrypted by using the user plane key, to ensure security of the data and/or the signaling.

In other words, according to the secure communication method provided in this application, privacy leakage, exploitation of a weak link, or the like can be reduced from perspectives of user identifier security, communication network topology security, terminal-to-core network protection security, and the like, to reduce excessive concerns caused by policy reasons in each area. Through a hierarchical setting, a small quantity of sensitive network elements are controlled and authorization is performed by node. In this way, most network element devices do not involve sensitive data or security level requirements are lowered, so that feasibility is greatly improved in existing network deployment.

The following uses a specific NF as an example to describe the secure communication method provided in this application. The method implements manners such as authorization by level, pseudonym, or NF, and improves network deployment feasibility, data security, and the like.

The trustworthiness levels of the NFs described above may include, for example, a trustworthy NF, a weakly trustworthy NF, and an untrustworthy NF. The trustworthy NF may include a trustworthy data NF, a trustworthy control NF, and a trustworthy support NF, as shown in Table 1. The trustworthy data NF may be configured to store subscription data and the like. The trustworthy data NF may include the third NF or the fourth NF described above. The trustworthy control NF may be configured to address an NF, or the like. The trustworthy control NF may include the first NF, the NRF, the NSSF, or the like described above. The trustworthy support NF may include the user plane function described above. The trustworthy support NF may include the UPF, a MEC, or the like. The trustworthy support NF may be a user plane network element authorized by an operator. Optionally, for example, the trustworthy support NF may skip uploading data (support an agreed check) based on an industry data requirement; or start terminal-to-core network protection based on an access network status (that is, encrypt data by using a user plane key); or start protection between trustworthy support NFs based on a network condition.

**Table 1**

| Name | Included main fields |
|---|---|
| Trustworthy network element | Trustworthy data NF, trustworthy control NF, and trustworthy support NF |
| Weakly trustworthy network element | Common PLMN network element |

The trustworthy network elements are described in detail below:
The trustworthy data NF may include a 5G UDM, a 4G UDM, an HSS, a PCF in a mobile network, or the like, or may be a user database part in the foregoing network element, or the like. The trustworthy data NF is trustworthy because the trustworthy data NF needs to store sensitive user information such as a user ID, a key, and subscription data. In other words, high sensitivity of the trustworthy data NF lies in that the trustworthy data NF needs to store the sensitive user information.

The trustworthy control NF may include a 5G NRF, a DNS, a 4G DNS, or the like. Addressing between NFs is controlled by the NRF, the DNS, or the like, and topology hiding, directional traffic steering, and the like can be performed. High sensitivity of the trustworthy control NF lies in that the trustworthy control NF needs to store data information such as network topology control.

For example, the DNS is configured to configure IP addressing between physical network elements (for example, between an access device and an AMF). The NRF is configured to configure addressing between virtual network functions (virtual network functions, VNFs) (for example, between an AMF and an SMF in a same physical data center). The NRF may further configure a trustworthy support NF, a weak trustworthy support NF, and the like.

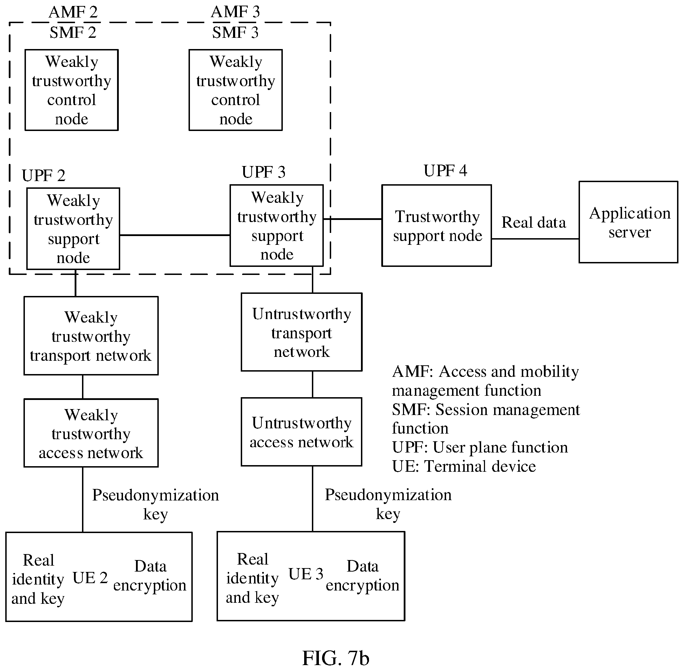

The trustworthy control NF may further include an SCP, configured to process an indirect addressing process and a topology hiding process that are specified in a 3GPP standard. For example, an AMF 2 in FIG. 7b may indirectly address an SMF 2 through the SCP, and then the AMF 2 may indirectly communicate with the SMF 2 through the SCP.

Optionally, the SMF may preconfigure some trustworthy support NFs that are trustworthy for all UEs.

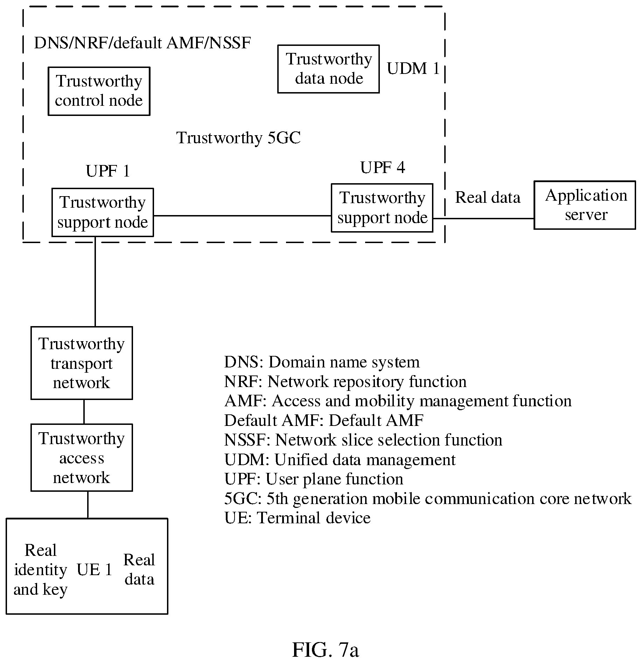

The trustworthy control NF may further include a default AMF (or a default AMF such as a default AMF) and an NSSF, and is configured to obtain real subscription data of a user before slice selection. As shown in FIG. 7a, when UE 1 (a VIP) registers with (or attaches to) a mobile communication network by using a trustworthy access network, a default AMF uses a real ID (for example, a first user identifier) of the UE 1 that is obtained from a trustworthy UDM.

The trustworthy support NF may include a UPF. The UPF may be a UPF that decrypts and views data, and may not be all UPFs in a network. Alternatively, the trustworthy support NF may further include a multi-access edge computing (multi edge compute, MEC). The MEC and the UPF may be two different NFs, or the MEC and the UPF may be integrated into one NF.

In some implementations, the trustworthy data NF, the trustworthy control NF, and the trustworthy support NF described above may be configured by an operator, or the like, that is, the trustworthy NF in the network is statically configured. Correspondingly, related information of the trustworthy NF may be stored in the trustworthy data NF. Alternatively, related information (for example, preconfiguration information) of the trustworthy NF may be stored in the NRF, the NSSF, or the like.

In some other implementations, the trustworthy NF described above may alternatively be determined by the trustworthy control NF (such as the NRF) or the like. For example, the NRF may determine the second NF that interacts with the first NF. Optionally, the trustworthy control NF may configure, based on a preset NF type (a type such as an AMF, an SMF, or a UPF), some trustworthy support NFs that may be trustworthy for all UEs; or may configure some trustworthy support NFs that are trustworthy for some UEs. For example, in FIG. 7a, for the UE 1, a UPF 1 may be used as a trustworthy support NF. However, for UE 5 (not shown in FIG. 7a), a trustworthy support NF that interacts with the UE 5 is not necessarily the UPF 1. In other words, the trustworthy control NF may configure some trustworthy support NFs. For example, the trustworthy support NF is trustworthy for all UEs, or the trustworthy support NF is trustworthy only for some UEs.

With reference to the methods shown in FIG. 2A and FIG. 2B to FIG. 6d, the trustworthy data NF may configure the trustworthy support NF according to the following methods. An example is as follows:
(1) A trustworthy support NF, a weakly trustworthy support NF, an untrustworthy support NF, or the like is configured based on a trustworthiness attribute in subscription data of a user identifier (for example, the first user identifier).
(2) A trustworthy support NF, a weakly trustworthy support NF, an untrustworthy support NF, or the like is configured based on a user type (for example, a common user or a VIP) of a user identifier. For example, NFs configured for a VIP may all be trustworthy NFs. A common NF or a weakly trustworthy NF may be configured for a common user.
(3) A trustworthy support NF is configured for a user based on an industry attribute/a requirement that data cannot be transferred out of a campus, for example, a MEC 1 and a MEC 4 when a MEC is co-located with a UPF 1 and a UPF 4.
(4) A trustworthy support NF may be configured for a user based on a session attribute of a user identifier, for example, a high security requirement of an audio/video call or data communication, or a high security level required by a current session.
(5) Based on a slice to which a user identifier belongs, a trustworthy support NF corresponding to the slice may provide a trustworthy service for the user identifier.
   In a possible implementation, the trustworthy data NF may further configure the trustworthy support NF in the following manners.
(6) According to a network security management and control requirement, a data NF that meets a specific condition needs to succeed in a check of some trustworthy support NFs.
(7) Based on network load balancing, load can be shared among some trustworthy support NFs.
(8) Based on real-time network monitoring, if a risk of a terminal increases, a trustworthy support NF and a management and control measure are adjusted.
(9) A trustworthy support NF of a specific type of users is implemented based on a network border protection measure, for example, depending on whether there is an anti-virus or firewall function.
(10) An appropriate trustworthy support NF is selected based on a physical deployment location of a network.
(11) An appropriate trustworthy support NF is selected based on a roaming agreement and a charging agreement.

Table 2 shows an example of a trustworthiness attribute of a user identifier and a network configuration policy in a trustworthy data NF.

**Table 2**

| Rule number | Subscribed PLMN | Trustworthiness attribute | Trustworthy data NF | Trustworthy control NF | Trustworthy NF authorized according to a policy rule |
|---|---|---|---|---|---|
| Policy rule 1 | User that subscribes to an operator | VIP | UDM, UDR, PCF, and the like | NRF, DNS, default AMF, NSSF, and the like | The trustworthy NF (for example, an SMF or a UPF) provides a trustworthy service for the VIP. |
| | User that subscribes to an operator | Industry data security protection | UDM, UDR, PCF, and the like | NRF, DNS, default AMF, and NSSF | User plane key (for example, a terminal-to-core network protection key is used to encrypt industry data), where optionally, if UE does not support terminal-to-core network protection, the trustworthy support NF (for example, the UPF 1 or the UPF 4 in FIG. 7a) may provide a trustworthy service for the UE. |
| | User that subscribes to an operator | Identity privacy protection requirement | UDM, UDR, PCF, and the like | NRF, DNS, and default AMF/NSSF | Pseudonymized access to an NF to protect a real identity |
| | User that subscribes to an operator | Common user, with no special requirement | Common NF, for example, a common UDM, UDR, or PCF (for example, a weakly trustworthy UDM) | Common NF | Access to a network with a real user identifier |
| Policy rule 2 | Non-local home user | Identity privacy protection requirement | Obtaining data from a subscribed UDM in a home PLMN | A trustworthy control NF does not exist in a local network but exists in a home network. | Pseudonymized access to the local network |
| | Non-local home user | Common user, with no special requirement | Obtaining data from a subscribed UDM in a home PLMN | A trustworthy control NF does not exist in a local network but exists in a home network. | Access to the local network with a real identity, without special protection |

The trustworthiness attribute in Table 2 indicates a trustworthiness attribute of a user identifier (for example, the first user identifier), or may be understood as a trustworthiness attribute of a terminal device that applies the user identifier. The trustworthy data NF may represent an NF that stores information such as subscription data of the user identifier. The trustworthy data NF in Table 2 may be understood as the third NF and/or the fourth NF in this application. The trustworthy control NF may be understood as the first NF, the NRF, the NSSF, or the like in this application. The trustworthy NF authorized according to the policy rule in Table 2 may represent an NF that provides a service for the terminal device, and the trustworthy NF may be understood as the second NF in this application.

For example, when the trustworthiness attribute of the user identifier is a VIP, the policy rule may indicate that an NF that provides a service for the VIP is a trustworthy NF. In this case, the trustworthy NF may include a trustworthy control NF such as an SMF and/or an AMF, and a trustworthy support NF such as a UPF. For example, in FIG. 7a, the UE 1 may interact with an application server by using a trustworthy access network, a trustworthy transport network, a trustworthy support NF such as the UPF 1, a trustworthy control NF, a trustworthy data NF, and a trustworthy support NF such as the UPF 4. Optionally, a user identifier of the VIP may be further pseudonymized, to protect the user identifier. Further, the UE may interact with the UPF 1 and the UPF 4 by using a user plane key.

For example, when a trustworthiness attribute of a user identifier is an industry data security protection attribute, the policy rule may be pseudonymizing the user identifier. For example, in FIG. 7b, when accessing a network, UE 2 or UE 3 may encrypt or pseudonymize a real user identifier. Optionally, the policy rule may further include that the UE interacts with the UPF by using a user plane key. If the UE does not support interaction with the UPF by using the user plane key (that is, the UE does not support terminal-to-core network protection), the UE may further interact with a trustworthy UPF. As shown in FIG. 7b, when the UE 2 or the UE 3 interacts with the application server, the UE 2 or the UE 3 may implement hop-by-hop (HOP by HOP) network encryption or integrity protection (that is, encryption from the UE 2 or the UE 3 to the UPF 4, and encryption from the UPF 4 to the application server) through a trustworthy support node such as the UPF 4, and so on.

Table 3 shows a function of each trustworthy control node. For example, the trustworthy control NF may store a trustworthiness level of an NF, a trustworthiness level of an NF set, or a trustworthiness level of a slice.

**Table 3**

| Number | Trustworthiness attribute | Trustworthy control NF | Function |
|---|---|---|---|
| Network topology configuration policy 1 | User with a high trustworthiness requirement | DNS | Configuring and storing a highly trustworthy NF |
| | | NRF | Configuring and storing a trustworthiness level of an NF |
| | | Default AMF | Addressing a trustworthy NF through an NSSF, an NRF, an SCP, or the like |
| | | NSSF | Storing a trustworthiness level of a slice, a trustworthiness level of an NF set corresponding to a slice, or the like |
| | | SCP | Configuring and storing a route to a trustworthy NF |

Table 4 shows different network topology configuration policies and requirements of different user identifiers. It may be understood that Table 4 may also be understood as a supplementary description of Table 3.

**Table 4**

| Number | Trustworthiness attribute | Trustworthy control NF | Requirement |
|---|---|---|---|
| Network topology configuration policy 2 | User with an industry data security protection requirement | DNS, NRF, default AMF, and NSSF | A trustworthy NF is required; or for a weakly trustworthy NF, a user identifier needs to be pseudonymized, or encrypted by using a user plane key. |
| Network topology configuration policy 3 | Users with an identity privacy requirement | Each NF | Pseudonymized access required by a common NF |
| Network topology configuration policy 4 | Common user | Each NF | Common NF |
| Network topology configuration policy 5 | Risk control scenario | Each NF | The policy is visible to an NF that passes through a selected and configured firewall. |

FIG. 7a and FIG. 7b each are a schematic diagram of a network architecture for secure communication according to an embodiment of this application. For example, a trustworthy data NF included in the network architecture may be a UDM 1 in FIG. 7a, a trustworthy control NF may be the NRF/DNS/default AMF/NSSF in FIG. 7a, and trustworthy support NFs may be the UPF 1 and the UPF 4 in FIG. 7a. Another NF (such as an AMF, an SMF, or a UPF) in a 5GC may be a weakly trustworthy general NF (which may also be referred to as a common NF). For example, the AMF 2, an AMF 3, the SMF 2, an SMF 3, a UPF 2, or a UPF 3 in FIG. 7b may be a general NF. Some trustworthy NFs are deployed, and remaining NFs are general NFs. This manner is easy to implement, and a network architecture can be quickly deployed. A terminal device to which FIG. 7a and FIG. 7b are applied may be any type of device. A specific type of the terminal device is not limited in embodiments of this application.

A weakly trustworthy NF cannot obtain a real user identifier of the terminal device. For example, the AMF 2 and the AMF 3 may obtain pseudonymized user identifiers of the UE 2 and the UE 3 from a trustworthy data NF of an operator, and perform service processing (which may also be understood as data and/or signaling processing and the like) by using the pseudonymized user identifiers. The AMF 2 and the AMF 3 do not need to perceive real user identifiers. Further, the AMF 2 and the AMF 3 may generate root keys based on the pseudonymized user identifiers, further generate user plane keys based on the root keys, and interact with the trustworthy support node, namely, the UPF 4 through SMFs (such as the SMF 2 and the SMF 3). When user plane data of the UE is sent to the trustworthy support node, namely, the UPF 4 through the weakly trustworthy support node, namely, the UPF 2 or the UPF 3, because the user plane data may be encrypted by using a user plane key between the UE and the UPF 4, the intermediate weakly trustworthy support node, namely, the UPF 2 or the UPF 3 cannot learn of real data of the UE.

For example, an untrustworthy NF may be an access device that easily listens to an air interface, such as Wi-Fi, or a risky transmission NF, such as a wide area network. When user data passes through these untrustworthy NFs, the user data needs to be a data flow encrypted or integrity-protected from the terminal device to a trustworthy support NF, or E2E application layer protection needs to be performed on the user data. Therefore, the untrustworthy NF (for example, the UPF 2 or the UPF 3) cannot learn of real data of the UE.

A trustworthiness attribute of the UE 1 meets a preset condition, and trustworthiness attributes of the UE 2 and the UE 3 do not meet the preset condition. Subscription data of the UE 1, the UE 2, and the UE 3, and the like may be stored in a trustworthy data NF. The UE 1, the UE 2, and the UE 3 subscribe to an operator AN 1, and the operator AN 1 stores a real user identifier, real subscription data, a real key, and the like in a trustworthy data NF (a trustworthy UDM, a trustworthy PCF, or a trustworthy database thereof).

In FIG. 7a, the UE 1 is a VIP. Therefore, an NF that interacts with the UE 1 may be an NF with a high trustworthiness level, for example, a trustworthy NF. For example, the UE 1 may interact with the application server by using a trustworthy access network, a trustworthy transport network, and a trustworthy 5th generation mobile communication core network (5G core, 5GC). In this case, optionally, the user identifier of the UE 1 may be transmitted in a form of a pseudonym between different NFs. Optionally, the user identifier of the UE 1 may alternatively be transmitted in a form of a real user identifier between different NFs (or transmitted in a trustworthy security domain).

In FIG. 7b, the UE 2 or the UE 3 (for example, a common user) may interact with the application server by using an untrustworthy access network or a weakly trustworthy access network, an untrustworthy transport network or a weakly trustworthy transport network, a weakly trustworthy 5GC, or a trustworthy support node such as the UPF 4. In this case, the user identifier of the UE 2 or the UE 3 may be pseudonymized. Alternatively, user data of the UE 2 or the UE 3 may be encrypted for transmission, and so on.

For example, in FIG. 7b, when the UE 2 accesses the 5GC by using a weakly trustworthy access network or an untrustworthy access network, E2E application layer protection may be performed on a data flow of the UE 2 based on a service requirement, or data protection may be performed between the terminal and a trustworthy support NF (for example, the UPF 4). When user IDs of the UE 2 and the UE 3 are transmitted in an untrustworthy area (that is, an untrustworthy domain), for example, the UPF 2 or the UPF 3, and arrive at the UPF 4, protection is performed by using the pseudonymization solution in this application. Alternatively, user plane data may be encrypted and integrity-protected by using a user plane key between the terminal and a trustworthy support NF (for example, the UPF 4) in this application. If application layer data protection is performed, content such as a responsibility to be taken when the law is violated needs to be specified because data cannot be monitored.

For specific descriptions of the UE 3 in FIG. 7b, refer to the foregoing UE 2. Details are not described herein again.

It may be understood that the network architectures shown in FIG. 7a and FIG. 7b are merely examples, and should not be understood as a limitation on embodiments of this application.

Some countries are concerned about trustworthiness of 5G NFs. As a result, trustworthiness of a large quantity of 5G NFs needs to be monitored, increasing burden of network construction. According to the secure communication method provided in this application, a small quantity of trustworthy NFs such as a trustworthy data NF, a trustworthy control NF, and a trustworthy support NF may be deployed. The trustworthy NF may obtain real data (such as a real user identifier or real user data) and a network topology, and another NF does not need to learn of the content. Deployment is simple and efficient, and feasibility of network construction is improved.

The following describes in detail communication apparatuses provided in embodiments of this application.

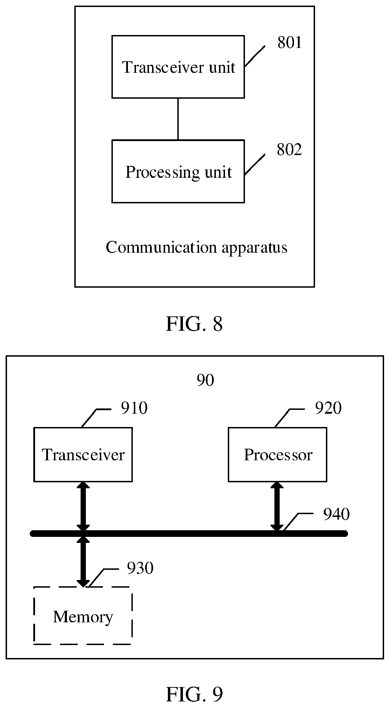

FIG. 8 is a schematic diagram of a structure of a communication apparatus according to an embodiment of this application. The communication apparatus may be configured to perform operations performed by the terminal device in the foregoing method embodiments. For example, the communication apparatus may be configured to perform the method shown in FIG. 3a and/or the method shown in FIG. 3b.

As shown in FIG. 8, the communication apparatus includes a transceiver unit 801 and a processing unit 802.

In some implementations, the transceiver unit 801 is configured to receive first indication information sent by a first NF, where the first indication information is used to indicate a terminal device to generate second pseudonym information and/or a root key.

The processing unit 802 is configured to: generate the second pseudonym information based on a first user identifier; generate the root key based on the second pseudonym information; and generate an access stratum key and/or a non-access stratum key based on the root key, where the access stratum key is used to protect data and/or signaling between the terminal device and an access device, and the non-access stratum key is used to protect data and/or signaling between the terminal device and the first NF.

In some other implementations, the transceiver unit 801 is configured to receive second indication information sent by a first NF, where the second indication information is used to indicate a terminal device to generate a user plane protection key.

The processing unit 802 is configured to: generate second pseudonym information based on a first user identifier; generate a root key based on the second pseudonym information; and generate a user plane key based on the root key, where the user plane key is used to protect data between the terminal device and a user plane function.

In this embodiment of this application, for specific descriptions of the first user identifier, the second pseudonym information, the root key, the user plane key, or the like, refer to FIG. 2A and FIG. 2B to FIG. 7b. Details are not described herein again.

It should be understood that when the communication apparatus is the terminal device or a component that implements the foregoing functions in the terminal device, the processing unit 802 may be one or more processors, and the transceiver unit 801 may be a transceiver; or the transceiver unit 801 may be a sending unit and a receiving unit, the sending unit may be a transmitter, the receiving unit may be a receiver, and the sending unit and the receiving unit are integrated into one component, for example, a transceiver.

When the communication apparatus is a circuit system such as a chip, the processing unit 802 may be one or more processors, or the processing unit 802 may be a processing circuit or the like. The transceiver unit 801 may be an input/output interface, which is also referred to as a communication interface, an interface circuit, an interface, or the like. Alternatively, the transceiver unit 801 may be a sending unit and a receiving unit, the sending unit may be an output interface, the receiving unit may be an input interface, and the sending unit and the receiving unit are integrated into one unit, for example, an input/output interface.

The communication apparatus in this embodiment of this application may perform any function performed by the terminal device in the foregoing method embodiments. For specific steps and/or functions that may be performed, refer to detailed descriptions in the foregoing method embodiments. Only brief descriptions are provided herein, and details are not described again.

In some implementations, the communication apparatus may be the terminal device in the foregoing method embodiments. In this case, the transceiver unit 801 may be implemented by using a transceiver, and the processing unit 802 may be implemented by using a processor. As shown in FIG. 9, the communication apparatus 90 includes one or more processors 920 and a transceiver 910. The processor and the transceiver may be configured to perform a function, an operation, or the like performed by the terminal device.

For example, the transceiver may be configured to receive first indication information sent by a first NF. For example, the processor may be configured to: generate second pseudonym information based on a first user identifier; generate a root key based on the second pseudonym information; and generate an access stratum key and/or a non-access stratum key based on the root key.

For another example, the transceiver may be configured to receive second indication information sent by a first NF. For example, the processor may be configured to: generate second pseudonym information based on a first user identifier; or generate a root key based on the second pseudonym information; or generate a user plane key based on the root key.

For specific implementations of the processor and the transceiver, refer to the methods shown in FIG. 2A and FIG. 2B to FIG. 7b. Details are not described herein again.

In each implementation of the communication apparatus shown in FIG. 9, the transceiver may include a receiver and a transmitter. The receiver is configured to perform a receiving function (or operation), and the transmitter is configured to perform a transmitting function (or operation). The transceiver is configured to communicate with another device/apparatus by using a transmission medium. The processor 920 receives and sends data and/or signaling by using the transceiver 910, and is configured to implement a corresponding method and the like in FIG. 3a and/or FIG. 3b in the foregoing method embodiments.

Optionally, the communication apparatus 90 may further include one or more memories 930, configured to store program instructions and/or data. The memory 930 is coupled to the processor 920. For example, the memory 930 may be configured to store the root key, the access stratum key, or the non-access stratum key.

The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate cooperatively with the memory 930. The processor 920 may execute the program instructions stored in the memory 930. Optionally, at least one of the one or more memories may be included in the processor.

A specific connection medium between the transceiver 910, the processor 920, and the memory 930 is not limited in this embodiment of this application. In this embodiment of this application, in FIG. 9, the memory 930, the processor 920, and the transceiver 910 are connected by using a bus 940, and the bus is represented by a thick line in FIG. 9. A connection manner between other parts is merely an example for description, and does not impose a limitation. The bus may be classified into an address bus, a data bus, a control bus, and the like. For ease of representation, only one thick line is used to represent the bus in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or a transistor logic device, a discrete hardware component, or the like, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module, or the like.

It may be understood that when the communication apparatus shown in FIG. 9 is a terminal device, the terminal device may further have more components than those in FIG. 9. For example, the terminal device shown in FIG. 9 may further include an antenna. This is not limited in this embodiment of this application.

It may be understood that the method performed by the processor and the transceiver above is merely an example. For specific steps performed by the processor and the transceiver, refer to the method described above.

It may be understood that the foregoing descriptions of a connection relationship between the processor, the transceiver, and the memory, the descriptions of the processor, and the like are all applicable to a core device described below. For example, the core device may be any device in a third NF, a fourth NF, an NRF, an NSSF, or a DNS.

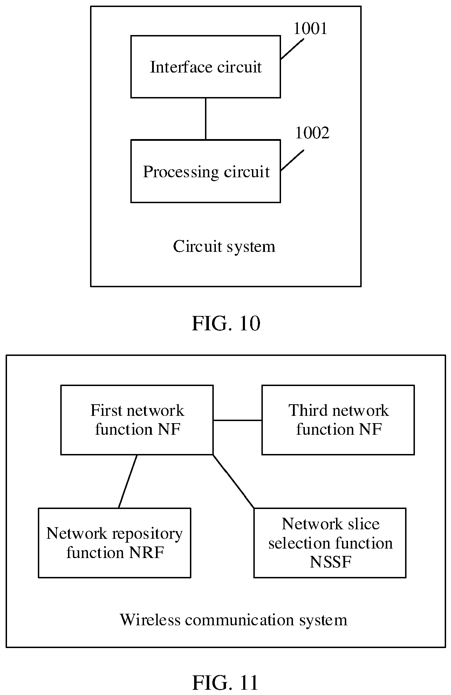

In some other implementations, the communication apparatus may be a circuit system in the terminal device. In this case, the processing unit 802 may be implemented by using a processing circuit, and the transceiver unit 801 is implemented by using an interface circuit. As shown in FIG. 10, the communication apparatus may include a processing circuit 1002 and an interface circuit 1001. The processing circuit 1002 may be a chip, a logic circuit, an integrated circuit, a processing circuit, a system on chip (system on chip, SoC), or the like. The interface circuit 1001 may be a communication interface, an input/output interface, or the like.

For example, the interface circuit may be configured to obtain first indication information and/or second indication information. For example, the processing circuit may be configured to: generate second pseudonym information based on a first user identifier; generate a root key based on the second pseudonym information; and generate an access stratum key and/or a non-access stratum key based on the root key. For another example, the processing circuit may be further configured to: generate second pseudonym information based on a first user identifier; generate a root key based on the second pseudonym information; and generate a user plane key based on the root key.

For specific implementations of the processing circuit and the interface circuit, refer to the methods shown in FIG. 2A and FIG. 2B to FIG. 7b. Details are not described herein again.

In embodiments of this application, the processing circuit may be a general-purpose processor, a digital signal processor, an application-specific integrated circuit, a field programmable gate array or another programmable logic device, a discrete gate or a transistor logic device, a discrete hardware component, or the like, and may implement or perform the methods, steps, and logical block diagrams disclosed in embodiments of this application. It may be understood that the descriptions of the processing circuit are all applicable to a circuit system described below. For example, the circuit system is a circuit system of any NF in a third NF, a fourth NF, an NRF, an NSSF, or a DNS.

It may be understood that the method performed by the interface circuit and the processing circuit above is merely an example. For specific steps performed by the interface circuit and the processing circuit, refer to the method described above.

FIG. 8 is still used. FIG. 8 is a schematic diagram of a structure of a communication apparatus according to an embodiment of this application. The communication apparatus may be configured to perform operations performed by the first NF in the foregoing method embodiments. For example, the communication apparatus may be configured to perform the methods performed by the first NF in FIG. 2A and FIG. 2B to FIG. 6d. For another example, the communication apparatus may be further configured to perform the method performed by the trustworthy control NF in FIG. 7a. As shown in FIG. 8, the communication apparatus includes a transceiver unit 801 and a processing unit 802.

In some implementations, the transceiver unit 801 is configured to send a first request message to a third NF, where the first request message carries first pseudonym information of a first user identifier of a terminal device.

The transceiver unit 801 is further configured to receive a first response message from the third NF, where the first response message carries second pseudonym information of the first user identifier.

In a possible implementation, the first response message further carries first indication information and/or second indication information, the first indication information is used to indicate to generate the second pseudonym information and/or a root key, and the second indication information is used to indicate to generate a user plane key.

In a possible implementation, the processing unit 802 is further configured to: if the first response message carries the first indication information, generate the root key based on the second pseudonym information.

The transceiver unit 801 is further configured to send the first indication information to the terminal device.

In a possible implementation, the processing unit 802 is further configured to: if the first response message carries the second indication information, generate the user plane key based on the second pseudonym information.

The transceiver unit 801 is further configured to send the second indication information to the terminal device.

In a possible implementation, the transceiver unit 801 is further configured to send the user plane key to a user plane function.

In some other implementations, the transceiver unit 801 is configured to: send a third request message to an NRF, where the third request message carries a trustworthiness level; and receive a third response message from the NRF, where the third response message carries identification information of a second NF. The communication apparatus exchanges data and/or signaling with the second NF by using the transceiver unit 801.

In a possible implementation, the processing unit 802 is configured to obtain a trustworthiness attribute of the first user identifier, and determine a trustworthiness level based on the trustworthiness attribute of the first user identifier.

In a possible implementation, the transceiver unit 801 is further configured to: send a fourth request message to an NSSF, where the fourth request message carries identification information of a first slice; and receive a fourth response message from the NSSF, where the fourth response message carries a trustworthiness level of the first slice; or the fourth response message carries a trustworthiness level of a second NF set.

In a possible implementation, when the fourth response message carries the trustworthiness level of the first slice, the third request message carries the trustworthiness level of the first slice and the identification information of the first slice; or when the fourth response message carries the trustworthiness level of the second NF set, the third request message carries the trustworthiness level of the second NF set and identification information of the second NF set.

In a possible implementation, the transceiver unit 801 is further configured to send a registration request message to an NRF, where the registration request message carries a trustworthiness level of the first NF.

In some other implementations, the transceiver unit 801 is further configured to send a fifth request message to a DNS, where the fifth request message carries domain name information and a trustworthiness level; and the transceiver unit 801 may be further configured to receive identification information of a second NF from the DNS. The identification information of the second NF may be carried in a fifth response message or the like.

It should be understood that when the communication apparatus is the first NF or a component that implements the foregoing functions in the first NF (for example, a core device or network element), the processing unit 802 may be one or more processors, and the transceiver unit 801 may be a transceiver; or the transceiver unit 801 may be a sending unit and a receiving unit, the sending unit may be a transmitter, the receiving unit may be a receiver, and the sending unit and the receiving unit are integrated into one component, for example, a transceiver.

When the communication apparatus is a circuit system such as a chip, the processing unit 802 may be one or more processors, or the processing unit 802 may be a processing circuit or the like. The transceiver unit 801 may be an input/output interface, which is also referred to as a communication interface, an interface circuit, an interface, or the like. Alternatively, the transceiver unit 801 may be a sending unit and a receiving unit, the sending unit may be an output interface, the receiving unit may be an input interface, and the sending unit and the receiving unit are integrated into one unit, for example, an input/output interface. It may be understood that when the communication apparatus is any one of a third NF, a fourth NF, an NRF, an NSSF, or a DNS, the descriptions are all applicable to a communication apparatus described below.

The communication apparatus in this embodiment of this application may perform any function performed by the first NF in the foregoing method embodiments. For specific steps and/or functions that may be performed, refer to detailed descriptions in the foregoing method embodiments. Only brief descriptions are provided herein, and details are not described again.

In some implementations, the communication apparatus may be the first NF in the foregoing method embodiments, and the first NF may be a core device. In this case, the transceiver unit 801 may be implemented by using a transceiver, and the processing unit 802 may be implemented by using a processor. FIG. 9 is still used. As shown in FIG. 9, the communication apparatus 90 includes one or more processors 920 and a transceiver 910. The processor and the transceiver may be configured to perform a function, an operation, or the like performed by the first NF.

For example, the transceiver may be configured to send a first request message to a third NF, and receive a first response message from the third NF. For example, the processor may be configured to: if the first response message carries first indication information, generate a root key based on second pseudonym information; or the processor may be configured to: if the first response message carries second indication information, generate a user plane key based on second pseudonym information. For another example, the transceiver may be further configured to send the first indication information and/or the second indication information to a terminal device. For another example, the transceiver may be further configured to send the user plane key to a user plane function.

For example, the transceiver may be configured to send a third request message to an NRF, and receive a third response message from the NRF. For example, the processor may be configured to obtain a trustworthiness attribute of a first user identifier; and determine a trustworthiness level based on the trustworthiness attribute of the first user identifier. For another example, the transceiver may be further configured to send a fourth request message to an NSSF, and receive a fourth response message sent by the NSSF. For another example, the transceiver may be further configured to send a registration request message to an NRF.

For example, the transceiver may be further configured to send a fifth request message to the DNS, and receive identification information of a second NF from the DNS.

It may be understood that for specific descriptions of the first request message, the first response message, the first indication information, the second indication information, the third request message, and the like, refer to FIG. 2A and FIG. 2B to FIG. 7b. Further, for specific implementations of the processor and the transceiver, refer to the methods shown in FIG. 2A and FIG. 2B to FIG. 7b. Details are not described herein again.

It may be understood that for more descriptions of the communication apparatus being the first NF, refer to the descriptions of the foregoing embodiments. For example, refer to the descriptions of FIG. 9 when the communication apparatus is the terminal device. Details are not described herein again. It may be understood that when the communication apparatus shown in FIG. 9 is a core device, the core device may further have more components than those in FIG. 9. For example, the core device shown in FIG. 9 may further include an antenna. This is not limited in this embodiment of this application.

It may be understood that the method performed by the processor and the transceiver above is merely an example. For specific steps performed by the processor and the transceiver, refer to the method described above.

In some other implementations, the communication apparatus may be a circuit system in the first NF. In this case, the processing unit 802 may be implemented by using a processing circuit, and the transceiver unit 801 is implemented by using an interface circuit. As shown in FIG. 10, the communication apparatus may include a processing circuit 1002 and an interface circuit 1001. The processing circuit 1002 may be a chip, a logic circuit, an integrated circuit, a processing circuit, a system on chip (system on chip, SoC), or the like. The interface circuit 1001 may be a communication interface, an input/output interface, or the like.

For example, the interface circuit may be configured to obtain a first response message, a third response message, or a fourth response message. Alternatively, the interface circuit may be configured to obtain identification information of a second NF. For example, the interface circuit may be configured to output a first request message, first indication information, second indication information, a user plane key, a third request message, a fourth request message, a fifth request message, or a registration request message. For example, the processing circuit may be configured to generate a root key or a user plane key based on second pseudonym information. For another example, the processing circuit may be further configured to obtain a trustworthiness attribute of a first user identifier; and determine a trustworthiness level based on the trustworthiness attribute of the first user identifier.

For specific implementations of the processing circuit and the interface circuit, refer to the methods shown in FIG. 2A and FIG. 2B to FIG. 7b. Details are not described herein again. It may be understood that for more descriptions of the circuit system in the communication apparatus being the first NF, refer to the descriptions of the circuit system in the communication apparatus being the terminal device. Details are not described herein again.

FIG. 8 is still used. FIG. 8 is a schematic diagram of a structure of a communication apparatus according to an embodiment of this application. The communication apparatus may be configured to perform operations performed by the third NF in the foregoing method embodiments. For example, the communication apparatus may be configured to perform the methods performed by the third NF in FIG. 2A and FIG. 2B to FIG. 6d. For another example, the communication apparatus may be further configured to perform the method performed by the trustworthy data NF in FIG. 7a. As shown in FIG. 8, the communication apparatus includes a transceiver unit 801 and a processing unit 802.

For example, the transceiver unit 801 may be configured to receive a first request message from a first NF; the processing unit 802 may be configured to determine a trustworthiness attribute of a first user identifier; and the transceiver unit 801 is further configured to send a first response message to the first NF.

For another example, the processing unit 802 may be further configured to obtain a first user identifier based on first pseudonym information, and generate second pseudonym information based on the first user identifier.

For another example, the processing unit 802 may be further configured to control a memory to store a correspondence between the second pseudonym information and the first user identifier.

For another example, the transceiver unit 801 may be further configured to send a second request message to a fourth NF, and receive second pseudonym information from the fourth NF.

It should be understood that when the communication apparatus is the third NF or a component that implements the foregoing functions in the third NF (for example, a core device or network element), the processing unit 802 may be one or more processors, and the transceiver unit 801 may be a transceiver; or the transceiver unit 801 may be a sending unit and a receiving unit, the sending unit may be a transmitter, the receiving unit may be a receiver, and the sending unit and the receiving unit are integrated into one component, for example, a transceiver.

When the communication apparatus is a circuit system such as a chip, the processing unit 802 may be one or more processors, or the processing unit 802 may be a processing circuit or the like. The transceiver unit 801 may be an input/output interface, which is also referred to as a communication interface, an interface circuit, an interface, or the like. Alternatively, the transceiver unit 801 may be a sending unit and a receiving unit, the sending unit may be an output interface, the receiving unit may be an input interface, and the sending unit and the receiving unit are integrated into one unit, for example, an input/output interface.

In some implementations, the communication apparatus may be the third NF in the foregoing method embodiments, and the third NF may be a core device. In this case, the transceiver unit 801 may be implemented by using a transceiver, and the processing unit 802 may be implemented by using a processor. FIG. 9 is still used. As shown in FIG. 9, the communication apparatus 90 includes one or more processors 920 and a transceiver 910. The processor and the transceiver may be configured to perform a function, an operation, or the like performed by the third NF.

For example, the transceiver may be configured to receive a first request message from a first NF; the processor may be configured to determine a trustworthiness attribute of a first user identifier; and the transceiver is further configured to send a first response message to the first NF. For another example, the processor may be further configured to obtain a first user identifier based on first pseudonym information, and generate second pseudonym information based on the first user identifier. For another example, the processor may be further configured to control a memory to store a correspondence between the second pseudonym information and the first user identifier. Alternatively, a memory may directly store a correspondence between the second pseudonym information and the first user identifier. For another example, the transceiver may be further configured to send a second request message to a fourth NF, and receive second pseudonym information from the fourth NF.

In some other implementations, the communication apparatus may be a circuit system (or a chip, an integrated circuit, or the like) in a third NF. In this case, the processing unit 802 may be implemented by using a processing circuit, and the transceiver unit 801 is implemented by using an interface circuit. As shown in FIG. 10, the communication apparatus may include a processing circuit 1002 and an interface circuit 1001. The processing circuit 1002 may be a chip, a logic circuit, an integrated circuit, a processing circuit, a system on chip (system on chip, SoC), or the like. The interface circuit 1001 may be a communication interface, an input/output interface, or the like.

For example, the interface circuit may be configured to obtain a first request message; the processing circuit may be configured to determine a trustworthiness attribute of a first user identifier; and the interface circuit is further configured to output a first response message. For another example, the processing circuit may be further configured to obtain a first user identifier based on first pseudonym information, and generate second pseudonym information based on the first user identifier. For another example, the processing circuit may be further configured to control a memory to store a correspondence between the second pseudonym information and the first user identifier. For another example, the interface circuit may be further configured to output a second request message, and obtain second pseudonym information.

The communication apparatus in this embodiment of this application may perform any function performed by the third NF in the foregoing method embodiments. For specific steps and/or functions that may be performed, refer to detailed descriptions in the foregoing method embodiments. Only brief descriptions are provided herein, and details are not described again.

FIG. 8 is still used. FIG. 8 is a schematic diagram of a structure of a communication apparatus according to an embodiment of this application. The communication apparatus may be configured to perform operations performed by the fourth NF in the foregoing method embodiments. For example, the communication apparatus may be configured to perform the methods performed by the fourth NF in FIG. 2A and FIG. 2B to FIG. 6d. For another example, the communication apparatus may be further configured to perform the method performed by the trustworthy data NF in FIG. 7a. As shown in FIG. 8, the communication apparatus includes a transceiver unit 801 and a processing unit 802.

For example, the transceiver unit 801 is configured to receive a second request message from a third NF, where the second request message carries first pseudonym information of a first user identifier of a terminal device.

The processing unit 802 is configured to: in response to the second request message, obtain the first user identifier based on the first pseudonym information, and generate second pseudonym information based on the first user identifier.

The transceiver unit 801 may be further configured to send the second pseudonym information to the third NF.

In a possible implementation, the processing unit 802 may be further configured to store a correspondence between the second pseudonym information and the first user identifier.

In some implementations, the communication apparatus may be the fourth NF (for example, the core device) in the foregoing method embodiments. In this case, the transceiver unit 801 may be implemented by using a transceiver, and the processing unit 802 may be implemented by using a processor. As shown in FIG. 9, the communication apparatus 90 includes one or more processors 920 and a transceiver 910. The processor and the transceiver may be configured to perform a function, an operation, or the like performed by the fourth NF.

For example, the transceiver is configured to receive a second request message from a third NF, where the second request message carries first pseudonym information of a first user identifier of a terminal device; the processor is configured to: in response to the second request message, obtain the first user identifier based on the first pseudonym information, and generate second pseudonym information based on the first user identifier; and the transceiver may be further configured to send the second pseudonym information to the third NF. For another example, the processor may be further configured to control a memory to store a correspondence between the second pseudonym information and the first user identifier.

It may be understood that for specific descriptions of the foregoing messages and the like and specific implementations of the processor and the transceiver, refer to FIG. 2A and FIG. 2B to FIG. 7b. Details are not described herein again.

In some other implementations, the communication apparatus may be a circuit system in the fourth NF. In this case, the processing unit 802 may be implemented by using a processing circuit, and the transceiver unit 801 is implemented by using an interface circuit. As shown in FIG. 10, the communication apparatus may include a processing circuit 1002 and an interface circuit 1001.

For example, the interface circuit may be configured to obtain a second request message, where the second request message carries first pseudonym information of a first user identifier of a terminal device; the processing circuit may be configured to: in response to the second request message, obtain the first user identifier based on the first pseudonym information, and generate second pseudonym information based on the first user identifier; and the interface circuit may be further configured to output the second pseudonym information.

For another example, the processing circuit may be further configured to control a memory to store a correspondence between the second pseudonym information and the first user identifier. Alternatively, a memory may directly store a correspondence between the second pseudonym information and the first user identifier.

For specific implementations of the processing circuit and the interface circuit and descriptions of the messages and the like described above, refer to the methods shown in FIG. 2A and FIG. 2B to FIG. 7b. Details are not described herein again.

FIG. 8 is still used. The communication apparatus may be configured to perform operations performed by the NRF in the foregoing method embodiments. For example, the communication apparatus may be configured to perform the methods performed by the NRF in FIG. 2A and FIG. 2B to FIG. 6d. For another example, the communication apparatus may be further configured to perform the method performed by the trustworthy control NF in FIG. 7a. As shown in FIG. 8, the communication apparatus includes a transceiver unit 801 and a processing unit 802.

For example, the transceiver unit 801 may be configured to receive a third request message from a first NF; the processing unit 802 may be configured to determine a second NF based on a trustworthiness level; and the transceiver unit 801 may be further configured to send a third response message to the first NF.

In a possible implementation, the transceiver unit 801 may be further configured to receive a registration request message sent by the second NF; and the processing unit 802 may be further configured to store a correspondence between identification information of the second NF and a trustworthiness level of the second NF.

In a possible implementation, the processing unit 802 is specifically configured to determine the second NF based on the stored correspondence between the identification information of the second NF and the trustworthiness level of the second NF, and the trustworthiness level carried in the third request message.

In a possible implementation, that the third request message carries a trustworthiness level includes: the third request message carries a trustworthiness level of a first slice, and the third request message further carries identification information of the first slice. The processing unit 802 is specifically configured to determine, based on the identification information of the first slice, a second NF set corresponding to the first slice, and determine the second NF from the second NF set based on a stored correspondence between identification information of an NF and a trustworthiness level of the NF, and the trustworthiness level of the first slice.

In a possible implementation, that the third request message carries a trustworthiness level includes: the third request message carries a trustworthiness level of a second NF set, and the third request message further carries identification information of the second NF set. The processing unit 802 is specifically configured to determine the second NF from the second NF set based on a stored correspondence between identification information of an NF and a trustworthiness level of the NF, and the trustworthiness level of the second NF set.

In a possible implementation, the transceiver unit 801 may be further configured to receive a registration request message from the first NF, where the registration request message carries a trustworthiness level of the first NF; and the processing unit 802 may be further configured to store a correspondence between identification information of the first NF and the trustworthiness level of the first NF.

In some implementations, the communication apparatus may be the NRF in the foregoing method embodiments, and the NRF may be a core device. In this case, the transceiver unit 801 may be implemented by using a transceiver, and the processing unit 802 may be implemented by using a processor. FIG. 9 is still used. As shown in FIG. 9, the communication apparatus 90 includes one or more processors 920 and a transceiver 910. The processor and the transceiver may be configured to perform a function, an operation, or the like performed by the NRF.

For example, the transceiver may be configured to receive a third request message from a first NF; the processor may be configured to determine a second NF based on a trustworthiness level; and the transceiver may be further configured to send a third response message to the first NF.

For another example, the transceiver may be further configured to receive a registration request message sent by a second NF; and the processor may be further configured to store a correspondence between identification information of the second NF and a trustworthiness level of the second NF.

For another example, the transceiver may be further configured to receive a registration request message from a first NF, where the registration request message carries a trustworthiness level of the first NF; and the processor may be further configured to store a correspondence between identification information of the first NF and the trustworthiness level of the first NF.

In some other implementations, the communication apparatus may be a circuit system in the NRF In this case, the processing unit 802 may be implemented by using a processing circuit, and the transceiver unit 801 is implemented by using an interface circuit. As shown in FIG. 10, the communication apparatus may include a processing circuit 1002 and an interface circuit 1001. The processing circuit 1002 may be a chip, a logic circuit, an integrated circuit, a processing circuit, a system on chip (system on chip, SoC), or the like. The interface circuit 1001 may be a communication interface, an input/output interface, or the like.

For example, the interface circuit may be configured to obtain a third request message; the processing circuit may be configured to determine a second NF based on a trustworthiness level; and the interface circuit may be further configured to output a third response message.

For another example, the interface circuit may be further configured to obtain a registration request message.

It may be understood that for a specific implementation of the NRF or the circuit system in the NRF, descriptions of the foregoing messages, and the like, refer to the foregoing embodiments. Details are not described herein again.

FIG. 8 is still used. The communication apparatus may be configured to perform operations performed by the NSSF in the foregoing method embodiments. For example, the communication apparatus may be configured to perform the methods performed by the NSSF in FIG. 2A and FIG. 2B to FIG. 6d. For another example, the communication apparatus may be further configured to perform the method performed by the trustworthy control NF in FIG. 7a. As shown in FIG. 8, the communication apparatus includes a transceiver unit 801 and a processing unit 802.

The transceiver unit 801 may be configured to: receive a fourth request message sent by a first NF, where the fourth request message carries identification information of a first slice; and send a fourth response message to the first NF, where the fourth response message carries a trustworthiness level of the first slice; or the fourth response message carries identification information of a second NF set and a trustworthiness level of the second NF set, and the second NF set is an NF set corresponding to the first slice.

In a possible implementation, the processing unit 802 may be configured to determine the trustworthiness level of the first slice based on first preconfiguration information and the identification information of the first slice, where the first preconfiguration information includes a correspondence between the trustworthiness level of the first slice and the identification information of the first slice.

In a possible implementation, the processing unit 802 may be further configured to determine the trustworthiness level of the second NF set based on second preconfiguration information and the identification information of the first slice, where the second preconfiguration information includes a correspondence between the identification information of the second NF set and the trustworthiness level of the second NF set.

In some implementations, the communication apparatus may be the NSSF in the foregoing method embodiments, and the NSSF may be a core device. In this case, the transceiver unit 801 may be implemented by using a transceiver, and the processing unit 802 may be implemented by using a processor. FIG. 9 is still used. As shown in FIG. 9, the communication apparatus 90 includes one or more processors 920 and a transceiver 910. The processor and the transceiver may be configured to perform a function, an operation, or the like performed by the NSSF.

For example, the transceiver may be configured to: receive a fourth request message sent by a first NF, where the fourth request message carries identification information of a first slice; and send a fourth response message to the first NF, where the fourth response message carries a trustworthiness level of the first slice; or the fourth response message carries identification information of a second NF set and a trustworthiness level of the second NF set, and the second NF set is an NF set corresponding to the first slice.

For another example, the processor 802 may be configured to determine the trustworthiness level of the first slice based on first preconfiguration information and the identification information of the first slice, where the first preconfiguration information includes a correspondence between the trustworthiness level of the first slice and the identification information of the first slice.

For another example, the processor 802 may be further configured to determine the trustworthiness level of the second NF set based on second preconfiguration information and the identification information of the first slice, where the second preconfiguration information includes a correspondence between the identification information of the second NF set and the trustworthiness level of the second NF set.

In some other implementations, the communication apparatus may be a circuit system in the NSSF. In this case, the processing unit 802 may be implemented by using a processing circuit, and the transceiver unit 801 is implemented by using an interface circuit. As shown in FIG. 10, the communication apparatus may include a processing circuit 1002 and an interface circuit 1001. The processing circuit 1002 may be a chip, a logic circuit, an integrated circuit, a processing circuit, a system on chip (system on chip, SoC), or the like. The interface circuit 1001 may be a communication interface, an input/output interface, or the like.

For example, the interface circuit may be configured to obtain a fourth request message, and output a fourth response message. The processing circuitry may be configured to determine a trustworthiness level of a first slice, a trustworthiness level of a second NF set, or the like.

It may be understood that for a specific implementation of the NSSF or the circuit system in the NSSF, descriptions of the foregoing messages, and the like, refer to the foregoing embodiments. Details are not described herein again.

FIG. 8 is still used. The communication apparatus may be further configured to perform operations performed by the DNS in the foregoing method embodiments. For example, the transceiver unit 801 may be configured to receive a fifth request message from a first NF, where the fifth request message carries domain name information and a trustworthiness level; the processing unit 802 may be configured to: in response to the fifth request message, determine a second NF based on the domain name information and the trustworthiness level; and the transceiver unit 801 may be further configured to send identification information of the second NF to the first NF.

In some implementations, the processing unit 802 may be implemented by using a processor, and the transceiver unit 801 may be implemented by using a transceiver. As shown in FIG. 9, the processor and the transceiver may be configured to perform a function, an operation, or the like performed by the DNS. For example, the transceiver may be configured to receive a fifth request message; the processor may be configured to determine a second NF based on domain name information and a trustworthiness level; and the transceiver may be further configured to send identification information of the second NF to a first NF.

In some other implementations, the processing unit 802 may alternatively be implemented by using a processing circuit, and the transceiver unit 801 may alternatively be implemented by using an interface circuit. As shown in FIG. 10, the interface circuit may be configured to obtain a fifth request message; the processing circuit may be configured to determine a second NF based on domain name information and a trustworthiness level; and the interface circuit may be further configured to output identification information of the second NF.

The communication apparatus in this embodiment of this application may perform any function performed by the DNS in the foregoing method embodiments. For specific steps and/or functions that may be performed, refer to detailed descriptions in the foregoing method embodiments. Only brief descriptions are provided herein, and details are not described again.

FIG. 11 is a schematic diagram of a wireless communication system according to an embodiment of this application. As shown in FIG. 11, the wireless communication system may include a first NF, a third NF, an NRF, and an NSSF. Further, the wireless communication system may further include a fourth NF (not shown in FIG. 11), a terminal device (not shown in FIG. 11), a second NF, and the like. Further, the wireless communication system may further include a DNS (not shown in FIG. 11) and the like. For a step or a function performed by each NF, refer to the foregoing embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve technical effects of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software function unit and sold or used as an independent product, the integrated unit may be stored in a computer-readable storage medium. Based on such an understanding, the technical solutions in this application essentially, or the part contributing to the conventional technology, or all or a part of the technical solutions may be implemented in a form of a software product. The computer software product is stored in a readable storage medium and includes several instructions for instructing a computer device (which may be a personal computer, a server, a network device, or the like) to perform all or a part of the steps of the methods in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

In addition, this application further provides a computer program. The computer program is configured to implement an operation and/or processing performed by the first NF in the secure communication method provided in this application.

This application further provides a computer program. The computer program is configured to implement an operation and/or processing performed by the third NF in the secure communication method provided in this application.

This application further provides a computer program. The computer program is configured to implement an operation and/or processing performed by the NRF in the secure communication method provided in this application.

This application further provides a computer program. The computer program is configured to implement an operation and/or processing performed by the NSSF in the secure communication method provided in this application.

This application further provides a computer program. The computer program is configured to implement an operation and/or processing performed by the terminal device in the secure communication method provided in this application.

This application further provides a computer program. The computer program is configured to implement an operation and/or processing performed by the fourth NF in the secure communication method provided in this application.

This application further provides a computer program. The computer program is configured to implement an operation and/or processing performed by the DNS in the secure communication method provided in this application.

This application further provides a computer-readable storage medium. The computer-readable storage medium stores computer code. When the computer code is run on a computer, the computer is enabled to perform an operation and/or processing performed by the first NF in the secure communication method provided in this application.

This application further provides a computer-readable storage medium. The computer-readable storage medium stores computer code. When the computer code is run on a computer, the computer is enabled to perform an operation and/or processing performed by the third NF in the secure communication method provided in this application.

This application further provides a computer-readable storage medium. The computer-readable storage medium stores computer code. When the computer code is run on a computer, the computer is enabled to perform an operation and/or processing performed by the NRF in the secure communication method provided in this application.

This application further provides a computer-readable storage medium. The computer-readable storage medium stores computer code. When the computer code is run on a computer, the computer is enabled to perform an operation and/or processing performed by the NSSF in the secure communication method provided in this application.

This application further provides a computer-readable storage medium. The computer-readable storage medium stores computer code. When the computer code is run on a computer, the computer is enabled to perform an operation and/or processing performed by the terminal device in the secure communication method provided in this application.

This application further provides a computer-readable storage medium. The computer-readable storage medium stores computer code. When the computer code is run on a computer, the computer is enabled to perform an operation and/or processing performed by the fourth NF in the secure communication method provided in this application.

This application further provides a computer-readable storage medium. The computer-readable storage medium stores computer code. When the computer code is run on a computer, the computer is enabled to perform an operation and/or processing performed by the DNS in the secure communication method provided in this application.

This application further provides a computer program product. The computer program product includes computer code or a computer program. When the computer code or the computer program is run on a computer, an operation and/or processing performed by the first NF in the secure communication method provided in this application are/is implemented.

This application further provides a computer program product. The computer program product includes computer code or a computer program. When the computer code or the computer program is run on a computer, an operation and/or processing performed by the third NF in the secure communication method provided in this application are/is implemented.

This application further provides a computer program product. The computer program product includes computer code or a computer program. When the computer code or the computer program is run on a computer, an operation and/or processing performed by the NRF in the secure communication method provided in this application are/is implemented.

This application further provides a computer program product. The computer program product includes computer code or a computer program. When the computer code or the computer program is run on a computer, an operation and/or processing performed by the NSSF in the secure communication method provided in this application are/is implemented.

This application further provides a computer program product. The computer program product includes computer code or a computer program. When the computer code or the computer program is run on a computer, an operation and/or processing performed by the terminal device in the secure communication method provided in this application are/is implemented.

This application further provides a computer program product. The computer program product includes computer code or a computer program. When the computer code or the computer program is run on a computer, an operation and/or processing performed by the fourth NF in the secure communication method provided in this application are/is implemented.

This application further provides a computer program product. The computer program product includes computer code or a computer program. When the computer code or the computer program is run on a computer, an operation and/or processing performed by the DNS in the secure communication method provided in this application are/is implemented.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A secure communication method, wherein the method comprises:
sending, by a first network function NF, a first request message to a third NF, wherein the first request message carries first pseudonym information of a first user identifier of a terminal device;
determining, by the third NF, a trustworthiness attribute of the first user identifier in response to the first request message; and
if the trustworthiness attribute of the first user identifier meets a preset condition, sending, by the third NF, a first response message to the first NF, wherein the first response message carries second pseudonym information of the first user identifier.

2. The method according to claim 1, wherein the sending, by the third NF, a first response message to the first NF comprises:
if a trustworthiness level of the first NF matches a preset level, sending, by the third NF, the first response message to the first NF.

3. The method according to claim 1 or 2, wherein the sending, by the third NF, a first response message to the first NF comprises:
if a trustworthiness level of a security domain in which the first NF is located matches a preset level, sending, by the third NF, the first response message to the first NF.

4. The method according to any one of claims 1 to 3, wherein the determining, by the third NF, a trustworthiness attribute of the first user identifier comprises:
determining, by the third NF, the trustworthiness attribute of the first user identifier based on a subscription level of the first user identifier; or
determining, by the third NF, the trustworthiness attribute of the first user identifier based on a session attribute of the first user identifier; or
determining, by the third NF, the trustworthiness attribute of the first user identifier based on an industry requirement of the first user identifier.

5. The method according to any one of claims 1 to 4, wherein before the sending, by the third NF, a first response message to the first NF, the method further comprises:
obtaining, by the third NF, the first user identifier based on the first pseudonym information, and generating the second pseudonym information based on the first user identifier.

6. The method according to claim 5, wherein the method further comprises:
storing, by the third NF, a correspondence between the second pseudonym information and the first user identifier.

7. The method according to any one of claims 1 to 4, wherein before the sending, by the third NF, a first response message to the first NF, the method further comprises:
sending, by the third NF, a second request message to a fourth NF, wherein the second request message carries the first pseudonym information;
in response to the second request message, obtaining, by the fourth NF, the first user identifier based on the first pseudonym information, and generating the second pseudonym information based on the first user identifier; and
sending, by the fourth NF, the second pseudonym information to the third NF, and receiving, by the third NF, the second pseudonym information.

8. The method according to any one of claims 1 to 7, wherein the first response message further carries first indication information and/or second indication information, the first indication information is used to indicate to generate the second pseudonym information and/or a root key, and the second indication information is used to indicate to generate a user plane key.

9. The method according to claim 8, wherein the method further comprises:
if the first response message comprises the first indication information, generating, by the first NF, the root key based on the second pseudonym information; and
sending, by the first NF, the first indication information to the terminal device.

10. The method according to claim 8, wherein the method further comprises:
if the first response message comprises the second indication information, generating, by the first NF, the user plane key based on the second pseudonym information; and
sending, by the first NF, the second indication information to the terminal device.

11. The method according to claim 10, wherein the method further comprises:
sending, by the first NF, the user plane key to a user plane function.

12. A secure communication method, wherein the method comprises:
receiving, by a terminal device, first indication information sent by a first network function NF, wherein the first indication information is used to indicate the terminal device to generate second pseudonym information and/or a root key;
generating, by the terminal device, the second pseudonym information based on a first user identifier;
generating, by the terminal device, the root key based on the second pseudonym information; and
generating, by the terminal device, an access stratum key and/or a non-access stratum key based on the root key, wherein the access stratum key is used to protect data and/or signaling between the terminal device and an access device, and the non-access stratum key is used to protect data and/or signaling between the terminal device and the first NF.

13. A secure communication method, wherein the method comprises:
receiving, by a terminal device, second indication information sent by a first NF, wherein the second indication information is used to indicate the terminal device to generate a user plane key;
generating, by the terminal device, second pseudonym information based on a first user identifier;
generating, by the terminal device, a root key based on the second pseudonym information; and
generating, by the terminal device, the user plane key based on the root key, wherein the user plane key is used to protect data between the terminal device and a user plane function.

14. A secure communication method, wherein the method comprises:
sending, by a first network function NF, a third request message to a network repository function NRF, wherein the third request message carries a trustworthiness level;
in response to the third request message, determining, by the NRF, a second NF based on the trustworthiness level; and
sending, by the NRF, identification information of the second NF to the first NF.

15. The method according to claim 14, wherein before the determining, by the NRF, a second NF based on the trustworthiness level, the method further comprises:
receiving, by the NRF, a registration request message sent by the second NF, wherein the registration request message carries a trustworthiness level of the second NF; and
storing, by the NRF, a correspondence between the identification information of the second NF and the trustworthiness level of the second NF.

16. The method according to claim 15, wherein the determining, by the NRF, a second NF based on the trustworthiness level comprises:
determining, by the NRF, the second NF based on the stored correspondence between the identification information of the second NF and the trustworthiness level of the second NF, and the trustworthiness level carried in the third request message.

17. The method according to any one of claims 14 to 16, wherein before the sending, by a first network function NF, a third request message to a network repository function NRF, the method further comprises:
obtaining, by the first NF, a trustworthiness attribute of a first user identifier from a third NF; and
determining, by the first NF, the trustworthiness level based on the trustworthiness attribute of the first user identifier.

18. The method according to claim 14 or 15, wherein before the sending, by a first network function NF, a third request message to a network repository function NRF, the method further comprises:
sending, by the first NF, a fourth request message to a network slice selection function NSSF, wherein the fourth request message carries identification information of a first slice; and
sending, by the NSSF, a fourth response message to the first NF, wherein the fourth response message carries a trustworthiness level of the first slice.

19. The method according to claim 18, wherein before the sending, by the NSSF, a fourth response message to the first NF, the method further comprises:
determining, by the NSSF, the trustworthiness level of the first slice based on first preconfiguration information and the identification information of the first slice, wherein the first preconfiguration information comprises a correspondence between the trustworthiness level of the first slice and the identification information of the first slice.

20. The method according to claim 19, wherein that the third request message carries a trustworthiness level comprises: the third request message carries the trustworthiness level of the first slice, and the third request message further carries the identification information of the first slice; and
the determining, by the NRF, a second NF based on the trustworthiness level comprises:
determining, by the NRF based on the identification information of the first slice, a second NF set corresponding to the first slice; and
determining, by the NRF, the second NF from the second NF set based on a stored correspondence between identification information of an NF and a trustworthiness level of the NF, and the trustworthiness level of the first slice.

21. The method according to claim 14 or 15, wherein before the sending, by a first network function NF, a third request message to a network repository function NRF, the method further comprises:
sending, by the first NF, a fourth request message to a network slice selection function NSSF, wherein the fourth request message carries identification information of a first slice; and
sending, by the NSSF, a fourth response message to the first NF, wherein the fourth response message carries identification information of a second NF set and a trustworthiness level of the second NF set, and the second NF set is an NF set corresponding to the first slice.

22. The method according to claim 21, wherein before the sending, by the NSSF, a fourth response message to the first NF, the method further comprises:
determining, by the NSSF, the trustworthiness level of the second NF set based on second preconfiguration information and the identification information of the first slice, wherein the second preconfiguration information comprises a correspondence between the identification information of the second NF set and the trustworthiness level of the second NF set.

23. The method according to claim 22, wherein that the third request message carries a trustworthiness level comprises: the third request message carries the trustworthiness level of the second NF set, and the third request message further carries the identification information of the second NF set; and
the determining, by the NRF, a second NF based on the trustworthiness level comprises:
determining, by the NRF, the second NF from the second NF set based on a stored correspondence between identification information of an NF and a trustworthiness level of the NF, and the trustworthiness level of the second NF set.

24. A secure communication method, wherein the method comprises:
receiving, by a domain name system DNS, a fifth request message from a first network function NF, wherein the fifth request message carries domain name information and a trustworthiness level;
in response to the fifth request message, determining, by the DNS, a second NF based on the domain name information and the trustworthiness level; and
sending, by the DNS, identification information of the second NF to the first NF.

25. A wireless communication system, wherein the system comprises:
a first network function NF, configured to send a first request message to a third NF, wherein the first request message carries first pseudonym information of a first user identifier of a terminal device; and
the third NF, configured to: determine a trustworthiness attribute of the first user identifier in response to the first request message; and if the trustworthiness attribute of the first user identifier meets a preset condition, send a first response message to the first NF, wherein the first response message carries second pseudonym information of the first user identifier.

26. The system according to claim 25, wherein
the third NF is specifically configured to: if the trustworthiness level of the first NF matches a preset level, send the first response message to the first NF.

27. The system according to claim 25 or 26, wherein
the third NF is specifically configured to: if a trustworthiness level of a security domain in which the first NF is located matches a preset level, send the first response message to the first NF.

28. The system according to any one of claims 25 to 27, wherein
the third NF is specifically configured to determine the trustworthiness attribute of the first user identifier based on a subscription level of the first user identifier; or
the third NF is specifically configured to determine the trustworthiness attribute of the first user identifier based on a session attribute of the first user identifier; or
the third NF is specifically configured to determine the trustworthiness attribute of the first user identifier based on an industry requirement of the first user identifier.

29. The system according to any one of claims 25 to 28, wherein
the third NF is further configured to obtain the first user identifier based on the first pseudonym information, and generate the second pseudonym information based on the first user identifier.

30. The system according to claim 29, wherein
the third NF is further configured to store a correspondence between the second pseudonym information and the first user identifier.

31. The system according to any one of claims 25 to 28, wherein
the third NF is further configured to send a second request message to a fourth NF, wherein the second request message carries the first pseudonym information;
the system further comprises:
the fourth NF, configured to: in response to the second request message, obtain the first user identifier based on the first pseudonym information, and generate the second pseudonym information based on the first user identifier; and send the second pseudonym information to the third NF; and
the third NF is further configured to receive the second pseudonym information.

32. The system according to any one of claims 25 to 31, wherein the first response message further carries first indication information and/or second indication information, the first indication information is used to indicate to generate the second pseudonym information and/or a root key, and the second indication information is used to indicate to generate a user plane key.

33. The system according to claim 32, wherein
the first NF is further configured to: if the first response message comprises the first indication information, generate the root key based on the second pseudonym information; and send the first indication information to the terminal device.

34. The system according to claim 32, wherein
the first NF is further configured to: if the first response message comprises the second indication information, generate the user plane key based on the second pseudonym information; and send the second indication information to the terminal device.

35. The system according to claim 34, wherein
the first NF is further configured to send the user plane key to a user plane function.

36. A wireless communication system, wherein the system comprises:
a first network function NF, configured to send a third request message to a network repository function NRF, wherein the third request message carries a trustworthiness level; and
the NRF, configured to: in response to the third request message, determine a second NF based on the trustworthiness level; and send identification information of the second NF to the first NF.

37. The system according to claim 36, wherein
the NRF is further configured to: receive a registration request message sent by the second NF, wherein the registration request message carries a trustworthiness level of the second NF; and store a correspondence between the identification information of the second NF and the trustworthiness level of the second NF.

38. The system according to claim 37, wherein
the NRF is specifically configured to determine the second NF based on the stored correspondence between the identification information of the second NF and the trustworthiness level of the second NF, and the trustworthiness level carried in the third request message.

39. The system according to any one of claims 36 to 38, wherein
the first NF is further configured to obtain a trustworthiness attribute of a first user identifier from a third NF, and determine the trustworthiness level based on the trustworthiness attribute of the first user identifier.

40. The system according to claim 36 or 37, wherein
the first NF is further configured to send a fourth request message to a network slice selection function NSSF, wherein the fourth request message carries identification information of a first slice; and
the system further comprises:
the NSSF, configured to send a fourth response message to the first NF, wherein the fourth response message carries a trustworthiness level of the first slice.

41. The system according to claim 40, wherein
the NSSF is further configured to determine the trustworthiness level of the first slice based on first preconfiguration information and the identification information of the first slice, wherein the first preconfiguration information comprises a correspondence between the trustworthiness level of the first slice and the identification information of the first slice.

42. The system according to claim 40, wherein that the third request message carries a trustworthiness level comprises: the third request message carries the trustworthiness level of the first slice, and the third request message further carries the identification information of the first slice; and
the NRF is specifically configured to determine, based on the identification information of the first slice, a second NF set corresponding to the first slice, and determine the second NF from the second NF set based on a stored correspondence between identification information of an NF and a trustworthiness level of the NF, and the trustworthiness level of the first slice.

43. The system according to claim 36 or 37, wherein
the first NF is further configured to send a fourth request message to a network slice selection function NSSF, wherein the fourth request message carries identification information of a first slice; and
the system further comprises:
the NSSF, configured to send a fourth response message to the first NF, wherein the fourth response message carries identification information of a second NF set and a trustworthiness level of the second NF set, and the second NF set is an NF set corresponding to the first slice.

44. The system according to claim 43, wherein
the NSSF is further configured to determine the trustworthiness level of the second NF set based on second preconfiguration information and the identification information of the first slice, wherein the second preconfiguration information comprises a correspondence between the identification information of the second NF set and the trustworthiness level of the second NF set.

45. The system according to claim 44, wherein that the third request message carries a trustworthiness level comprises: the third request message carries the trustworthiness level of the second NF set, and the third request message further carries the identification information of the second NF set; and
the NRF is specifically configured to determine the second NF from the second NF set based on a stored correspondence between identification information of an NF and a trustworthiness level of the NF, and the trustworthiness level of the second NF set.
